(19) Europäisches Patentamt
European Patent Office
Office européen des brevets

(11) EP 4 664 393 A1

(12) EUROPÄISCHE PATENTANMELDUNG

(43) Veröffentlichungstag:
**17.12.2025 Patentblatt 2025/51**

(21) Anmeldenummer: **24181079.5**

(22) Anmeldetag: **10.06.2024**

(51) Internationale Patentklassifikation (IPC):
***G06T 5/50*** *(2006.01)* ***G06T 5/94*** *(2024.01)*

(52) Gemeinsame Patentklassifikation (CPC):
**G06T 5/50; G06T 5/94;** G06T 2207/10072; G06T 2207/20224; G06T 2207/30096

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Bayer Aktiengesellschaft**
**51373 Leverkusen (DE)**

(72) Erfinder:
- **HÖHNE, Johannes**
  **16515 Oranienburg (DE)**
- **KREIS, Felix Karl**
  **10249 Berlin (DE)**
- **JANBAKHSHI, Parvaneh**
  **13357 Berlin (DE)**
- **BALTRUSCHAT, Ivo Matteo**
  **22299 Hamburg (DE)**

(74) Vertreter: **BIP Patents**
**c/o Bayer Intellectual Property GmbH**
**Alfred-Nobel-Straße 50**
**40789 Monheim am Rhein (DE)**

# (54) ERZEUGEN VON SYNTHETISCHEN KONTRASTVERSTÄRKTEN RADIOLOGISCHEN AUFNAHMEN

(57) Die hierin offenbarten Systeme, Verfahren und Computerprogramme beziehen sich auf die Erzeugung von synthetischen kontrastverstärkten radiologischen Aufnahmen.

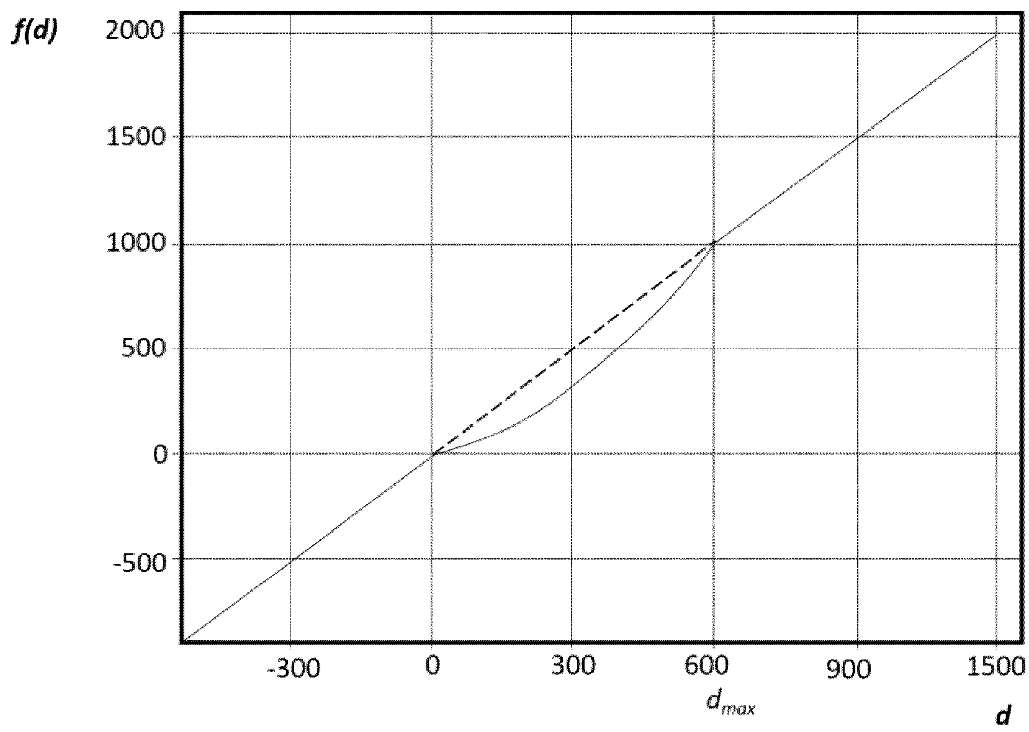


Fig. 1

EP 4 664 393 A1

**Beschreibung**

TECHNISCHES GEBIET

Die hierin offenbarten Systeme, Verfahren und Computerprogramme beziehen sich auf die Erzeugung von synthetischen kontrastverstärkten radiologischen Aufnahmen.

EINLEITUNG

WO2024/100233A1 offenbart ein Verfahren zum Erzeugen einer synthetischen kontrastverstärkten radiologischen Aufnahme eines Untersuchungsbereichs eines Untersuchungsobjekts. Die synthetische kontrastverstärkte radiologische Aufnahme wird auf Basis einer ersten und einer zweiten radiologischen Aufnahme des Untersuchungsbereichs des Untersuchungsobjekts erzeugt. Die erste radiologische Aufnahme repräsentiert den Untersuchungsbereich ohne Kontrastmittel. Die zweite Repräsentation repräsentiert den Untersuchungsbereich nach Applikation eines Kontrastmittels. Durch Subtrahieren der ersten radiologischen Aufnahme von der zweiten radiologischen Aufnahme wird eine Repräsentation des Untersuchungsbereichs erzeugt, die die Kontrastmittelverteilung im Untersuchungsbereich repräsentiert. Diese Repräsentation wird mit einem Verstärkungsfaktor multipliziert und das Ergebnis der Multiplikation auf die erste radiologische Aufnahme addiert. Das Ergebnis ist eine synthetische kontrastverstärkte radiologische Aufnahme, bei der das auf Kontrastmittel in dem Untersuchungsbereich zurückzuführende Signal gegenüber der zweiten radiologischen Aufnahme verstärkt ist.

Ein Problem an dem in WO2024/100233A1 offenbarten Verfahren besteht darin, dass Rauschen im selben Maße verstärkt wird, wie das auf das Kontrastmittel zurückzuführende Signal.

Dieses Problem wird durch die Gegenstände der vorliegenden Offenbarung adressiert.

KURZE ZUSAMMENFASSUNG

Ein erster Gegenstand der vorliegenden Offenbarung ist ein computerimplementiertes Verfahren umfassend die Schritte:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,
- Bereitstellen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Ein weiterer Gegenstand der vorliegenden Offenbarung ist ein Computersystem umfassend:

einen Prozessor; und

einen Speicher, der ein Computerprogramm speichert, das so konfiguriert ist, dass es, wenn es vom Prozessor

ausgeführt wird, eine Operation durchführt, wobei die Operation umfasst:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,
- Bereitstellen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Ein weiterer Gegenstand der vorliegenden Offenbarung ist ein Computerprogramm, das in einen Arbeitsspeicher eines Computersystems geladen werden kann und dort das Computersystem dazu veranlasst, folgende Schritte ausführen:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,
- Bereitstellen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Ein weiterer Gegenstand der vorliegenden Offenbarung ist eine Verwendung eines Kontrastmittels in einem radiologischen Untersuchungsverfahren umfassend:

- Erzeugen einer ersten Repräsentation, wobei die erste Repräsentation einen Untersuchungsbereich eines Untersuchungsobjekts ohne Kontrastmittel oder nach Applikation einer ersten Menge des Kontrastmittels repräsentiert,
- Erzeugen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Ein weiterer Gegenstand der vorliegenden Offenbarung ist ein Kontrastmittel zur Verwendung in einem radiologischen Untersuchungsverfahren umfassend:

- Erzeugen einer ersten Repräsentation, wobei die erste Repräsentation einen Untersuchungsbereich eines Untersuchungsobjekts ohne Kontrastmittel oder nach Applikation einer ersten Menge des Kontrastmittels repräsentiert,
- Erzeugen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Ein weiterer Gegenstand der vorliegenden Offenbarung ist ein Kit umfassend ein Computerprogrammprodukt und ein Kontrastmittel, wobei das Computerprogrammprodukt ein Computerprogramm umfasst, das in einen Arbeitsspeicher eines Computersystems geladen werden kann und dort das Computersystem dazu veranlasst, folgende Schritte ausführen:

- Bereitstellen einer ersten Repräsentation, wobei die erste Repräsentation einen Untersuchungsbereich eines Untersuchungsobjekts ohne Kontrastmittel oder nach Applikation einer ersten Menge des Kontrastmittels repräsentiert,

- Bereitstellen einer zweiten Repräsentation, wobei die zweite Repräsentation den Untersuchungsbereich des Untersuchungsobjekts nach Applikation einer zweiten Menge des Kontrastmittels repräsentiert,

- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,

- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,

- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,

- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Weitere Gegenstände und Ausführungsformen finden sich in den abhängigen Patentansprüchen, der vorliegenden Beschreibung sowie in den Zeichnungen.

## KURZE BESCHREIBUNG DER ZEICHNUNGEN

Fig. 1 zeigt beispielhaft und schematisch eine nicht-lineare Verstärkung gemäß der vorliegenden Offenbarung.

Fig. 2 zeigt schematisch ein weiteres Beispiel einer nicht-linearen Verstärkung gemäß der vorliegenden Offenbarung.

Fig. 3 zeigt beispielhaft und schematisch eine Erzeugung einer synthetischen kontrastverstärkten Repräsentation.

Fig. 4 zeigt beispielhaft und schematisch ein Verfahren zum Erzeugen einer synthetischen kontrastverstärkten Repräsentation in Form eines Ablaufdiagramms.

Fig. 5 zeigt beispielhaft und schematisch ein Computersystem gemäß der vorliegenden Offenbarung.

Fig. 6 zeigt beispielhaft und schematisch eine weitere Ausführungsform des Computersystems der vorliegenden Offenbarung.

Fig. 7 stellt die Kontrast-Rausch-Verhältnisse von synthetischen kontrastverstärkten Repräsentationen, die nach unterschiedlichen Verfahren erzeugt wurden, gegenüber.

## DETAILLIERTE BESCHREIBUNG

Die Gegenstände der vorliegenden Offenbarung werden nachstehend näher erläutert, ohne zwischen den Gegenständen (Verfahren, Computersystem, Computerprogramm(produkt), Verwendung, Kontrastmittel zur Verwendung, Kit) zu unterscheiden. Die nachfolgenden Erläuterungen sollen vielmehr für alle Gegenstände in analoger Weise gelten, unabhängig davon, in welchem Kontext (Verfahren, Computersystem, Computerprogramm(produkt), Verwendung, Kontrastmittel zur Verwendung, Kit) sie erfolgen.

Wenn in der vorliegenden Beschreibung oder in den Patentansprüchen Schritte in einer Reihenfolge genannt sind, bedeutet dies nicht, dass diese Offenbarung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut beispielsweise auf einem anderen Schritt auf, was erforderlich macht, dass der aufbauende Schritt nachfolgend ausgeführt wird (was im Einzelfall aber deutlich wird). Die genannten Reihenfolgen stellen damit beispielhafte Ausführungsformen dar.

Die Gegenstände der vorliegenden Offenbarung werden an einigen Stellen in Bezug auf Zeichnungen näher

erläutert. Dabei sind in den Zeichnungen konkrete Ausführungsformen mit konkreten Merkmalen und Merkmalskombinationen dargestellt, die in erster Linie der Veranschaulichung dienen; die Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Die vorliegende Offenbarung beschreibt Mittel zum Erzeugen einer synthetischen radiologischen Aufnahme eines Untersuchungsbereichs eines Untersuchungsobjekts.

Der Begriff "synthetisch" bedeutet, dass die synthetische radiologische Aufnahme nicht das (unmittelbare) Ergebnis einer Messung an einem realen Untersuchungsobjekt ist, sondern dass die synthetische radiologische Aufnahme das Ergebnis von Berechnungen ist. Ein Synonym für den Begriff "synthetisch" ist der Begriff "künstlich". Eine synthetische radiologische Aufnahme kann aber auf gemessenen radiologischen Aufnahmen basieren, d.h. die Berechnungen können auf Basis von gemessenen radiologischen Aufnahmen erfolgen.

Das "Untersuchungsobjekt" ist üblicherweise ein Lebewesen, beispielsweise ein Säugetier, beispielsweise ein Mensch.

Der "Untersuchungsbereich" ist ein Teil des Untersuchungsobjekts, zum Beispiel ein Organ oder ein Teil eines Organs oder mehrere Organe oder ein anderer Teil des Untersuchungsobjekts.

Der Untersuchungsbereich kann beispielsweise eine Leber, eine Niere, ein Herz, eine Lunge, ein Gehirn, ein Magen, eine Blase, eine Bauchspeicheldrüse, eine Prostatadrüse, eine Brust, ein Darm oder ein Teil davon oder ein anderer Teil des Körpers eines Säugetiers (z.B. eines Menschen) sein.

In einer Ausführungsform umfasst der Untersuchungsbereich eine Leber oder einen Teil einer Leber oder der Untersuchungsbereich ist eine Leber oder ein Teil einer Leber eines Säugetiers, beispielsweise eines Menschen.

In einer weiteren Ausführungsform umfasst der Untersuchungsbereich ein Gehirn oder einen Teil eines Gehirns oder der Untersuchungsbereich ist ein Gehirn oder ein Teil eines Gehirns eines Säugetiers, beispielsweise eines Menschen.

In einer weiteren Ausführungsform umfasst der Untersuchungsbereich ein Herz oder ein Teil eines Herzes oder der Untersuchungsbereich ist ein Herz oder ein Teil eines Herzes eines Säugetiers, beispielsweise eines Menschen.

In einer weiteren Ausführungsform umfasst der Untersuchungsbereich einen Thorax oder einen Teil eines Thorax oder der Untersuchungsbereich ist ein Thorax oder ein Teil eines Thorax eines Säugetiers, beispielsweise eines Menschen.

In einer weiteren Ausführungsform umfasst der Untersuchungsbereich einen Magen oder einen Teil eines Magens oder der Untersuchungsbereich ist ein Magen oder ein Teil eines Magens eines Säugetiers, beispielsweise eines Menschen.

In einer weiteren Ausführungsform umfasst der Untersuchungsbereich eine Bauchspeicheldrüse oder einen Teil einer Bauchspeicheldrüse oder der Untersuchungsbereich ist eine Bauchspeicheldrüse oder ein Teil einer Bauchspeicheldrüse eines Säugetiers, beispielsweise eines Menschen.

In einer weiteren Ausführungsform umfasst der Untersuchungsbereich eine Niere oder einen Teil einer Niere oder der Untersuchungsbereich ist eine Niere oder ein Teil einer Niere eines Säugetiers, beispielsweise eines Menschen.

In einer weiteren Ausführungsform umfasst der Untersuchungsbereich einen oder beide Lungenflügel oder einen Teil eines Lungenflügels Säugetiers, beispielsweise eines Menschen.

In einer weiteren Ausführungsform umfasst der Untersuchungsbereich eine Brust oder einen Teil einer Brust oder der Untersuchungsbereich ist eine Brust oder ein Teil einer Brust eines weiblichen Säugetiers, beispielsweise eines weiblichen Menschen.

In einer weiteren Ausführungsform umfasst der Untersuchungsbereich eine Prostata oder einen Teil einer Prostata oder der Untersuchungsbereich ist eine Prostata oder ein Teil einer Prostata eines männlichen Säugetiers, beispielsweise eines männlichen Menschen.

Der Untersuchungsbereich, auch Aufnahmevolumen (engl.: *field of view,* FOV) genannt, stellt insbesondere ein Volumen dar, welches in radiologischen Aufnahmen abgebildet wird. Der Untersuchungsbereich wird typischerweise durch einen Radiologen, beispielsweise auf einer Übersichtsaufnahme festgelegt. Selbstverständlich kann der Untersuchungsbereich alternativ oder zusätzlich auch automatisch, beispielsweise auf Grundlage eines ausgewählten Protokolls, festgelegt werden.

In einem ersten Schritt werden eine erste Repräsentation und eine zweite Repräsentation des Untersuchungsbereichs des Untersuchungsobjekts bereitgestellt.

Der Begriff "Bereitstellen" kann beispielsweise "Empfangen" oder "Erzeugen" bedeuten.

Der Begriff "Empfangen" umfasst sowohl das Abrufen als auch das Entgegennehmen von Repräsentationen, die z.B. an das Computersystem der vorliegenden Offenbarung übermittelt werden. Repräsentationen können aus einem oder mehreren Datenspeichern ausgelesen und/oder von einem separaten Computersystem übermittelt werden. Repräsentationen können beispielsweise von einem Computertomographen, von einem Magnetresonanztomographen,

von einem Positronen-Emmisions-Tomographen oder von einem Ultraschall-Scanner empfangen werden.

Der Begriff "Erzeugen" bedeutet vorzugsweise, dass eine Repräsentation auf Basis einer anderen (z.B. einer empfangenen) Repräsentation oder auf Basis von mehreren anderen (z.B. empfangenen) Repräsentationen erzeugt wird. So kann beispielsweise eine empfangene Repräsentation eine Repräsentation eines Untersuchungsbereichs eines Untersuchungsobjekts im Frequenzraum sein. Auf Basis dieser Frequenz-Repräsentation kann beispielsweise eine Repräsentation des Untersuchungsbereichs des Untersuchungsobjekts im Ortsraum durch eine Transformation (z.B. eine inverse Fourier-Transformation) erzeugt werden. Weitere Möglichkeiten eine Repräsentation auf Basis einer oder mehrerer anderer Repräsentationen zu erzeugen, sind in dieser Beschreibung beschrieben.

Der Begriff "Erzeugen" kann auch bedeuten, dass eine Repräsentation messtechnisch erzeugt wird. Eine erzeugte Repräsentation kann also das Ergebnis einer radiologischen Untersuchung an einem Untersuchungsobjekt sein.

In einer Ausführungsform der vorliegenden Offenbarung sind die erste Repräsentation und/oder die zweite Repräsentation das Ergebnis einer radiologischen Untersuchung an einem Untersuchungsobjekt.

Die "Radiologie" ist das Teilgebiet der Medizin, das sich mit der Anwendung elektromagnetischer Strahlen und (unter Einbezug etwa der Ultraschalldiagnostik) mechanischer Wellen zu diagnostischen, therapeutischen und/oder wissenschaftlichen Zwecken befasst. Neben Röntgenstrahlen kommen auch andere ionisierende Strahlung wie Gammastrahlung oder Elektronen zum Einsatz. Da ein wesentlicher Einsatzzweck die Bildgebung ist, werden auch andere bildgebende Verfahren wie die Sonographie und die Magnetresonanztomographie (Kernspintomographie) zur Radiologie gerechnet, obwohl bei diesen Verfahren keine ionisierende Strahlung zum Einsatz kommt. Der Begriff "Radiologie" im Sinne der vorliegenden Offenbarung umfasst insbesondere die folgenden Untersuchungsmethoden: Computertomographie (CT), Magnetresonanztomographie (MRT), Positronen-Emissions-Tomographie (PET), Sonographie.

In einer Ausführungsform der vorliegenden Offenbarung handelt es sich bei der radiologischen Untersuchung um eine magnetresonanztomographische Untersuchung. In einer Ausführungsform der vorliegenden Offenbarung sind die erste Repräsentation und die zweite Repräsentation das Ergebnis einer magnetresonanztomographischen Untersuchung. Die erste Repräsentation und die zweite Repräsentation können MRT-Aufnahmen sein oder aus einer oder mehreren MRT-Aufnahmen erzeugt worden sein.

In einer weiteren Ausführungsform handelt es sich bei der radiologischen Untersuchung um eine computertomographische Untersuchung. In einer Ausführungsform der vorliegenden Offenbarung sind die erste Repräsentation und die zweite Repräsentation das Ergebnis einer computertomographischen Untersuchung. Die erste Repräsentation und die zweite Repräsentation können CT-Aufnahmen sein oder aus einer oder mehreren CT-Aufnahmen erzeugt worden sein.

In einer weiteren Ausführungsform handelt es sich bei der radiologischen Untersuchung um eine PET-Untersuchung. In einer Ausführungsform der vorliegenden Offenbarung sind die erste Repräsentation und die zweite Repräsentation das Ergebnis einer PET-Untersuchung. Die erste Repräsentation und die zweite Repräsentation können PET-Aufnahmen sein oder aus einer oder mehreren PET-Aufnahmen erzeugt worden sein.

In einer weiteren Ausführungsform handelt es sich bei der radiologischen Untersuchung um eine Ultraschalluntersuchung. In einer Ausführungsform der vorliegenden Offenbarung sind die erste Repräsentation und die zweite Repräsentation das Ergebnis einer Ultraschalluntersuchung. Die erste Repräsentation und die zweite Repräsentation können Ultraschallaufnahmen sein oder aus einer oder mehreren Ultraschallaufnahmen erzeugt worden sein.

Die erste Repräsentation und die zweite Repräsentation können eine Repräsentation im Ortsraum (Bildraum), eine Repräsentation im Frequenzraum, eine Repräsentation im Projektionsraum oder eine Repräsentation in einem anderen Raum sein.

In einer Repräsentation im Ortsraum, in dieser Beschreibung auch als Ortsraumdarstellung oder Ortsraum-Repräsentation bezeichnet, wird der Untersuchungsbereich üblicherweise durch eine Vielzahl an Bildelementen (z.B. Pixel oder Voxel oder Doxel) repräsentiert, die beispielsweise rasterförmig angeordnet sein können, wobei jedes Bildelement einen Teil des Untersuchungsbereichs repräsentiert, wobei jedem Bildelement ein Farbwert oder Grauwert zugeordnet sein kann. Der Farbwert oder Grauwert repräsentiert üblicherweise eine Signalintensität, z.B. die Abschwächung von Röntgenstrahlen. Ein in der Radiologie weit verbreitetes Format zur Speicherung und Verarbeitung von Repräsentationen im Ortsraum ist das DICOM-Format. DICOM (Digital Imaging and Communications in Medicine) ist ein offener Standard zur Speicherung und zum Austausch von Informationen im medizinischen Bilddatenmanagement.

In einer Repräsentation im Frequenzraum, in dieser Beschreibung auch als Frequenzraumdarstellung oder Frequenzraum-Repräsentation bezeichnet, wird der Untersuchungsbereich durch eine Überlagerung von Grundschwingungen repräsentiert. Beispielsweise kann der Untersuchungsbereich durch eine Summe von Sinus- und Kosinus-Funktionen mit verschiedenen Amplituden, Frequenzen und Phasen repräsentiert werden. Die Amplituden und Phasen können als Funktion der Frequenzen beispielsweise in einer zwei- oder dreidimensionalen Darstellung aufgetragen werden. Üblicherweise wird die niedrigste Frequenz (Ursprung) in das Zentrum gelegt. Je weiter man sich von diesem Zentrum entfernt, desto höher sind die Frequenzen. Jeder Frequenz kann eine Amplitude, mit der die Frequenz in der Frequenzraumdarstellung vertreten ist, und eine Phase, die angibt, inwieweit die jeweilige Schwingung gegenüber einer

Sinus- oder Kosinus-Schwingung verschoben ist, zugeordnet werden.

Eine Repräsentation im Ortsraum lässt sich beispielsweise durch eine Fourier-Transformation in eine Repräsentation im Frequenzraum überführen (transformieren). Umgekehrt lässt sich eine Repräsentation im Frequenzraum beispielsweise durch eine inverse Fourier-Transformation in eine Repräsentation im Ortsraum überführen (transformieren).

Details über Ortsraumdarstellungen und Frequenzraumdarstellungen und ihre jeweilige Umwandlung ineinander sind in zahlreichen Publikationen beschrieben, siehe z.B.: https://see.stanford.edu/materials/lsoftaee261/book-fall-07.pdf.

Eine Repräsentation eines Untersuchungsbereichs im Projektionsraum ist üblicherweise das Ergebnis einer computertomographischen Untersuchung vor einer Bildrekonstruktion. Mit anderen Worten: die bei der computertomographischen Untersuchung anfallenden Rohdaten können als eine Projektionsraumdarstellung aufgefasst werden. Im Rahmen einer Computertomographie wird die Intensität bzw. die Schwächung der Röntgenstrahlung beim Durchgang durch das Untersuchungsobjekt gemessen. Daraus lassen sich Projektionswerte errechnen. In einem zweiten Schritt wird die durch die Projektion kodierte Objektinformation durch eine computergestützte Rekonstruktion in ein Bild (Ortsraumdarstellung) transformiert. Die Rekonstruktion kann mit der Radon-Transformation erfolgen. Die Radon-Transformation beschreibt die Verknüpfung zwischen dem unbekannten Untersuchungsobjekt und seinen zugehörigen Projektionen.

Details über die Transformation von Projektionsdaten in eine Ortsraumdarstellung sind in zahlreichen Publikationen beschrieben, siehe z.B. K. Fang: The Radon Transformation and Its Application in Tomography, Journal of Physics Conference Series 1903(1):012066.

Es gibt weitere Räume, in denen Repräsentationen des Untersuchungsbereichs vorliegen können. Der Einfachheit halber und der besseren Verständlichkeit halber werden die Gegenstände der vorliegenden Offenbarung in weiten Teilen der Beschreibung auf Basis von Ortsraum-Repräsentationen beschrieben.

Dies soll jedoch nicht als Einschränkung verstanden werden. Der Fachmann der Bildanalyse weiß, wie er die entsprechenden Teile der Beschreibung auf andere Repräsentationen als Ortsraum-Repräsentationen anwenden kann.

Die erste Repräsentation repräsentiert den Untersuchungsbereich des Untersuchungsobjekts ohne Kontrastmittel oder nach Applikation einer ersten Menge eines Kontrastmittels. Die zweite Repräsentation repräsentiert den Untersuchungsbereich des Untersuchungsobjekts nach Applikation einer zweiten Menge des Kontrastmittels.

"Kontrastmittel" sind Substanzen oder Gemische von Substanzen, die die Darstellung von Strukturen und Funktionen des Körpers bei radiologischen Untersuchungen verbessern.

In der Computertomographie werden meist iodhaltige Lösungen als Kontrastmittel eingesetzt. In der Magnetresonanztomographie (MRT) werden üblicherweise superparamagnetische Substanzen (z.B. Eisenoxidnanopartikel, superparamagnetische Eisen-Platin-Partikel (SIPPs)) oder paramagnetische Substanzen (z.B. Gadolinium-Chelate, Mangan-Chelate) als Kontrastmittel verwendet. Im Fall der Sonographie werden üblicherweise Flüssigkeiten, die gasgefüllte Mikrobläschen (*microbubbles*) enthalten, intravenös verabreicht. Bei der Positronen-Emissions-Tomographie (PET) werden Radiotracer als Kontrastmittel verwendet.

Beispiele für Kontrastmittel sind in der Literatur zu finden (siehe z.B. A. S. L. Jascinth et al.: Contrast Agents in computed tomography: A Review, Journal of Applied Dental and Medical Sciences, 2016, Vol. 2, Issue 2, 143 - 149; H. Lusic et al.: X-ray-Computed Tomography Contrast Agents, Chem. Rev. 2013, 113, 3, 1641-1666; https://www.radiology.wisc.edu/wp-content/uploads/2017/10/contrast-agents-tutorial.pdf, M. R. Nough et al.: Radiographie and magnetic resonances contrast agents: Essentials and tips for safe practices, World J Radiol. 2017 Sep 28; 9(9): 339-349; L. C. Abonyi et al.: Intravascular Contrast Media in Radiography: Historical Development & Review ofRisk Factors for Adverse Reactions, South American Journal of Clinical Research, 2016, Vol. 3, Issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362; J. Trotter et al.: Positron Emission Tomography (PET)/Computed Tomography (CT) Imaging in Radiation Therapy Treatment Planning: A Review of PET Imaging Tracers and Methods to Incorporate PET/CT, Advances in Radiation Oncology (2023) 8, 101212).

In einer Ausführungsform der vorliegenden Erfindung ist das Kontrastmittel ein MRT-Kontrastmittel.

In einer Ausführungsform der vorliegenden Offenbarung handelt es sich bei dem Kontrastmittel um ein Mittel, das Gadolinium(III) 2-[4,7,10-tris(carboxymethyl)-1,4,7,10-tetrazacyclododec-1-yl]essigsäure (auch als Gadolinium-DOTA oder Gadotersäure bezeichnet) umfasst.

In einer weiteren Ausführungsform handelt es sich bei dem Kontrastmittel um ein Mittel, das Gadolinium(III) Ethoxybenzyl-diethylenetriaminepentaessigsäure (Gd-EOB-DTPA) umfasst; vorzugsweise umfasst das Kontrastmittel das Dinatriumsalz der Gadolinium(III)-ethoxybenzyl-diethylenetriaminpentaessigsäure (auch als Gadoxetsäure bezeichnet).

In einer Ausführungsform der vorliegenden Offenbarung handelt es sich bei dem Kontrastmittel um ein Mittel, das Gadolinium(III) 2-[3,9-bis[1-carboxylato-4-(2,3-dihydroxypropylamino)-4-oxobutyl]-3,6,9,15-tetrazabicyclo[9.3.1]pentadeca-1(15),11,13-trien-6-yl]-5-(2,3-dihydroxypropylamino)-5-oxopentanoat (auch als Gadopiclenol bezeichnet,

siehe z.B. WO2007/042504 sowie WO2020/030618 und/oder WO2022/013454) umfasst.

In einer Ausführungsform der vorliegenden Offenbarung handelt es sich bei dem Kontrastmittel um ein Mittel, das Dihydrogen[(±)-4-carboxy-5,8,11-tris(carboxymethyl)-1-phenyl-2-oxa-5,8,11-triazatridecan-13-oato(5-)]gadolinat(2-) (auch als Gadobensäure bezeichnet) umfasst.

In einer Ausführungsform der vorliegenden Offenbarung handelt es sich bei dem Kontrastmittel um ein Mittel, das Tetragadolinium-[4,10-bis(carboxylatomethyl)-7-{3,6,12,15-tetraoxo-16-[4,7,10-tris-(carboxylatomethyl)-1,4,7,10-tetraazacyclododecan-1-yl]-9,9-bis({ [({2-[4,7,10-tris-(carboxylatomethyl)-1,4,7,10-tetraazacyclododecan-1 -yl]propanoyl} amino)acetyl] -amino }methyl)-4,7,11,14-tetraazahepta-decan-2-yl}-1,4,7,10-tetraazacyclododecan-1-yl]acetat (auch als Gadoquatrane bezeichnet) umfasst (siehe z.B. J. Lohrke et al.: Preclinical Profile of Gadoquatrane: A Novel Tetrameric, Macrocyclic High Relaxivity Gadolinium-Based Contrast Agent. Invest Radiol., 2022, 1, 57(10): 629-638; WO2016193190).

In einer Ausführungsform der vorliegenden Offenbarung handelt es sich bei dem Kontrastmittel um ein Mittel, das einen $Gd^{3+}$-Komplex einer Verbindung der Formel (I)

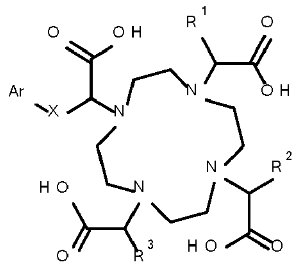

(I) ,

umfasst, wobei

Ar eine Gruppe ausgewählt aus

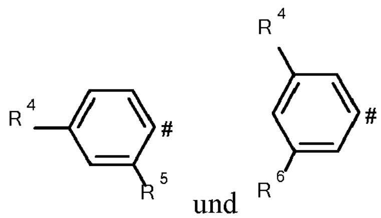

darstellt,

wobei # die Anknüpfung zu X darstellt,

X eine Gruppe darstellt, die aus

$CH_2$, $(CH_2)_2$, $(CH_2)_3$, $(CH_2)_4$ und $*\text{-}(CH_2)_2\text{-}O\text{-}CH_2\text{-}^{\#}$ ausgewählt wird,

wobei * die Anknüpfung zu Ar darstellt und # die Anknüpfung zum Essigsäurerest darstellt,

$R^1$, $R^2$ and $R^3$ unabhängig voneinander ein Wasserstoffatom oder eine Gruppe ausgewählt aus $C_1$-$C_3$-Alkyl, $-CH_2OH$, $-(CH_2)_2OH$ und $-CH_2OCH_3$ darstellen,

$R^4$ eine Gruppe ausgewählt aus $C_2$-$C_4$-Alkoxy, $(H_3C\text{-}CH_2)\text{-}O\text{-}(CH_2)_2\text{-}O\text{-}$, $(H_3C\text{-}CH_2)\text{-}O\text{-}(CH_2)_2\text{-}O\text{-}(CH_2)_2\text{-}O\text{-}$ und $(H_3C\text{-}CH_2)\text{-}O\text{-}(CH_2)_2\text{-}O\text{-}(CH_2)_2\text{-}O\text{-}(CH_2)_2\text{-}O\text{-}$ darstellt,

$R^5$ ein Wasserstoffatom darstellt,
und

$R^6$ ein Wasserstoffatom darstellt,

oder ein Stereoisomer, Tautomer, Hydrat, Solvat oder Salz davon, oder eine Mischung davon.

In einer Ausführungsform der vorliegenden Offenbarung handelt es sich bei dem Kontrastmittel um ein Mittel, das einen $Gd^{3+}$-Komplex einer Verbindung der Formel (II)

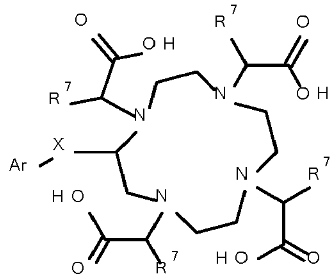

(II) ,

umfasst, wobei

Ar eine Gruppe ausgewählt aus

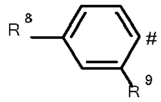

and

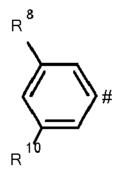

darstellt,

wobei # die Anknüpfung zu X darstellt,

X eine Gruppe darstellt, die aus $CH_2$, $(CH_2)_2$, $(CH_2)_3$, $(CH_2)_4$ and $*-(CH_2)_2-O-CH_2-^{\#}$ ausgewählt wird, wobei * die Anknüpfung zu Ar darstellt und # die Anknüpfung zum Essigsäurerest darstellt,

$R^7$ ein Wasserstoffatom oder eine Gruppe ausgewählt aus Ci-Cs-Alkyl, $-CH_2OH$, $-(CH_2)_2OH$ und $-CH_2OCH_3$ darstellt,

$R^8$ eine Gruppe ausgewählt aus $C_2$-$C_4$-Alkoxy, $(H_3C-CH_2O)-(CH_2)_2-O-$, $(H_3C-CH_2O)-(CH_2)_2-O-(CH_2)_2-O-$ und $(H_3C-CH_2O)-(CH_2)_2-O-(CH_2)_2-O-(CH_2)_2-O-$ darstellt;

$R^9$ und $R^{10}$ unabhängig voneinander ein Wasserstoffatom darstellen;

oder ein Stereoisomer, Tautomer, Hydrat, Solvat oder Salz davon, oder eine Mischung davon.

Der Begriff "$C_1$-$C_3$-Alkyl" bedeutet eine lineare oder verzweigte, gesättigte, einwertige Kohlenwasserstoffgruppe mit 1, 2 oder 3 Kohlenstoffatomen, z.B. Methyl, Ethyl, n-Propyl und Isopropyl. Der Begriff "$C_2$-$C_4$-Alkyl" bedeutet eine lineare oder verzweigte, gesättigte, einwertige Kohlenwasserstoffgruppe mit 2, 3 oder 4 Kohlenstoffatomen.

Der Begriff "$C_2$-$C_4$-Alkoxy" bedeutet eine lineare oder verzweigte, gesättigte, einwertige Gruppe der Formel ($C_2$-$C_4$-Alkyl)-O-, in der der Begriff "$C_2$-$C_4$-Alkyl" wie oben definiert ist, z. B. ein Methoxy, Ethoxy, n-Propoxy oder Isopropoxygruppe.

In einer Ausführungsform der vorliegenden Offenbarung handelt es sich bei dem Kontrastmittel um ein Mittel, das Gadolinium 2,2',2"-(10-{1-carboxy-2-[2-(4-ethoxyphenyl)ethoxy]ethyl}-1,4,7,10-tetraazacyclododecan-1,4,7-triyl) triacetat umfasst (siehe z.B. WO2022/194777, Beispiel 1).

In einer Ausführungsform der vorliegenden Offenbarung handelt es sich bei dem Kontrastmittel um ein Mittel, das Gadolinium 2,2',2"-{10-[1-carboxy-2-{4-[2-(2-ethoxyethoxy)ethoxy]phenyl}ethyl]-1,4,7,10-tetraazacyclododecan-1,4,7-triyl}triacetat umfasst (siehe z.B. WO2022/194777, Beispiel 2).

In einer Ausführungsform der vorliegenden Offenbarung handelt es sich bei dem Kontrastmittel um ein Mittel, das Gadolinium 2,2',2"-{10-[(1R)-1-carboxy-2-{4-[2-(2-ethoxyethoxy)ethoxy]phenyl}ethyl]-1,4,7,10-tetraazacyclododecan-1,4,7-triyl}triacetat umfasst (siehe z.B. WO2022/194777, Beispiel 4).

In einer Ausführungsform der vorliegenden Offenbarung handelt es sich bei dem Kontrastmittel um ein Mittel, das Gadolinium (2S,2'S,2"S)-2,2',2"-{10-[(1S)-1-carboxy-4-{4-[2-(2-ethoxyethoxy)ethoxy] phenyl}butyl]-1,4,7,10-tetraazacyclododecan-1,4,7-triyl}tris(3-hydroxypropanoat) umfasst (siehe z.B. WO2022/194777, Beispiel 15).

In einer Ausführungsform der vorliegenden Offenbarung handelt es sich bei dem Kontrastmittel um ein Mittel, das Gadolinium 2,2',2"-{10-[(1S)-4-(4-butoxyphenyl)-1-carboxybutyl]-1,4,7,10-tetraazacyclododecan-l,4,7-triyl}triacetat umfasst (siehe z.B. WO2022/194777, Beispiel 31).

In einer Ausführungsform der vorliegenden Offenbarung handelt es sich bei dem Kontrastmittel um ein Mittel, das Gadolinium-2,2',2"-{(2*S*)-10-(carboxymethyl)-2-[4-(2-ethoxyethoxy)benzyl]-1,4,7,10-tetraazacyclododecane-1,4,7-triyl}triacetat umfasst.

In einer Ausführungsform der vorliegenden Offenbarung handelt es sich bei dem Kontrastmittel um ein Mittel, das Gadolinium-2,2',2"-[10-(carboxymethyl)-2-(4-ethoxybenzyl)-1,4,7,10-tetraazacyclododecane-1,4,7-triyl]triacetat umfasst.

In einer Ausführungsform der vorliegenden Offenbarung handelt es sich bei dem Kontrastmittel um ein Mittel, das Gadolinium(III) 5,8-bis(carboxylatomethyl)-2-[2-(methylamino)-2-oxoethyl]-10-oxo-2,5,8,11-tetraazadodecan-1-carboxylat-Hydrat (auch als Gadodiamid bezeichnet) umfasst.

In einer Ausführungsform der vorliegenden Offenbarung handelt es sich bei dem Kontrastmittel um ein Mittel, das Gadolinium(III) 2-[4-(2-hydroxypropyl)-7,10-bis(2-oxido-2-oxoethyl)-1,4,7,10-tetrazacyclododec-1-yl]acetat (auch als Gadoteridol bezeichnet) umfasst.

In einer Ausführungsform der vorliegenden Offenbarung handelt es sich bei dem Kontrastmittel um ein Mittel, das Gadolinium(III) 2,2',2"-(10-((2R,3S)-1,3,4-trihydroxybutan-2-yl)-1,4,7,10-tetraazacyclododecan-1,4,7-triyl)triacetat (auch als Gadobutrol oder Gd-DO3A-butrol bezeichnet) umfasst.

In einer Ausführungsform der vorliegenden Erfindung ist das Kontrastmittel ein hepatobiliäres Kontrastmittel. Ein hepatobiliäres Kontrastmittel zeichnet sich dadurch aus, dass es spezifisch von Leberzellen, den Hepatozyten, aufgenommen wird, sich im Funktionsgewebe (Parenchym) anreichert und den Kontrast in gesundem Lebergewebe verstärkt. Ein Beispiel eines hepatobiliären Kontrastmittels ist das Dinatriumsalz der Gadoxetsäure (Gd-EOB-DTPA Dinatrium), das in dem US-Patent No. 6,039,93 1A beschrieben ist unter dem Markennamen Primovist® und Eovist® kommerziell erhältlich ist. Weitere hepatobiliäre Kontrastmittel sind u.a. in WO2022/194777 beschrieben.

In einer Ausführungsform handelt es sich bei der radiologischen Untersuchung um eine MRT-Untersuchung, bei der ein MRT-Kontrastmittel eingesetzt wird.

In einer weiteren Ausführungsform handelt es sich bei der radiologischen Untersuchung um eine CT-Untersuchung, bei der ein CT-Kontrastmittel eingesetzt wird.

In einer weiteren Ausführungsform handelt es sich bei der radiologischen Untersuchung um eine CT-Untersuchung, bei der ein MRT-Kontrastmittel eingesetzt wird.

Die erste Repräsentation repräsentiert den Untersuchungsbereich ohne Kontrastmittel oder nach der Applikation einer ersten Menge eines Kontrastmittels. In einer Ausführungsform repräsentiert die erste Repräsentation den Untersuchungsbereich ohne Kontrastmittel.

Die zweite Repräsentation repräsentiert den Untersuchungsbereich nach der Applikation einer zweiten Menge eines Kontrastmittels. Die zweite Menge ist größer als die erste Menge (wobei die erste Menge wie beschrieben auch Null sein kann). Der Ausdruck "nach Applikation einer zweiten Menge des Kontrastmittels" soll nicht so verstanden werden, dass sich die erste Menge und die zweite Menge in dem Untersuchungsbereich addieren (es sei denn die erste Menge ist Null). Der Ausdruck "die Repräsentation repräsentiert den Untersuchungsbereich nach der Applikation einer (ersten oder zweiten) Menge" soll also eher bedeuten: "die Repräsentation repräsentiert den Untersuchungsbereich mit einer (ersten oder zweiten) Menge" oder "die Repräsentation repräsentiert den Untersuchungsbereich umfassend eine (erste oder zweite) Menge".

In einer Ausführungsform ist sowohl die erste Menge als auch die zweite Menge des Kontrastmittels kleiner als die Standardmenge.

In einer weiteren Ausführungsform entspricht die zweite Menge des Kontrastmittels der Standardmenge.

In einer weiteren Ausführungsform ist die erste Menge des Kontrastmittels gleich Null und die zweite Menge des Kontrastmittels ist kleiner als die Standardmenge.

In einer weiteren Ausführungsform ist die erste Menge des Kontrastmittels gleich Null und die zweite Menge des Kontrastmittels entspricht der Standardmenge.

Die Standardmenge ist üblicherweise die vom Hersteller und/oder Vertreiber des Kontrastmittels empfohlene und/oder die von einer Zulassungsbehörde zugelassene und/oder die in einem Beipackzettel zum Kontrastmittel aufgeführte Menge.

So beträgt die Standardmenge von Primovist® beispielsweise 0,025 mmol Gd-EOB-DTPA Dinatrium / kg Körpergewicht.

Auf Basis der ersten Repräsentation und der zweiten Repräsentation wird eine dritte Repräsentation erzeugt.

Das Erzeugen der dritten Repräsentation umfasst ein Subtrahieren der ersten Repräsentation von der zweiten Repräsentation. Das Subtrahieren der ersten Repräsentation von der zweiten Repräsentation kann beispielsweise im Ortsraum erfolgen. In einem solchen Fall liegen sowohl die erste Repräsentation als auch die zweite Repräsentation als Ortsraum-Repräsentationen vor. Die erste Repräsentation und die zweite Repräsentation umfassen jeweils eine Vielzahl an Bildelementen. Der Begriff "Vielzahl an Bildelementen" bedeutet mindestens 100, üblicherweise mehr als 1000 Bildelemente. Jedes Bildelement repräsentiert einen Teilbereich des Untersuchungsbereichs des Untersuchungsobjekts. Jedem Bildelement ist üblicherweise mindestens ein Farbwert oder ein Grauwert zugeordnet. Das Subtrahieren der ersten Repräsentation von der zweiten Repräsentation erfolgt üblicherweise Bildelement für Bildelement. Dabei werden die Farbwerte oder Grauwerte korrespondierender Bildelemente voneinander subtrahiert. "Korrespondierende Bildelemente" sind solche, die denselben Teilbereich des Untersuchungsbereichs repräsentieren.

Die dritte Repräsentation umfasst ebenfalls eine Vielzahl an Bildelementen. Jedem Bildelement ist ein Differenzwert zugeordnet. Der Differenzwert ist das Ergebnis der Subtraktion der Farbwerte oder Grauwerte voneinander.

Es ist möglich, negative Differenzwerte auf Null (oder einen anderen festen Wert) zu setzen, um negative Differenzwerte zu vermeiden.

Erfolgt das Subtrahieren der ersten Repräsentation von der zweiten Repräsentation im Frequenzraum, umfasst das Erzeugen der dritten Repräsentation ferner: Transformieren des Ergebnisses des Subtrahierens in den Ortsraum. Eine solche Transformation kann beispielsweise mittels einer inversen Fourier-Transformation erfolgen.

Auf Basis der dritten Repräsentation wird eine vierte Repräsentation erzeugt. Das Erzeugen der vierten Repräsentation umfasst eine nicht-lineare Verstärkung zumindest eines Teils der Differenzwerte der dritten Repräsentation.

Der Begriff "Verstärkung" bedeutet, dass der Betrag eines Differenzwertes (d.h. der Absolutwert des Differenzwerts) vergrößert wird.

In dem in WO2024/100233A1 offenbarten Verfahren wird jeder Differenzwert mit einem konstanten Verstärkungsfaktor multipliziert. Dabei bedeutet "konstant", dass der Verstärkungsfaktor unabhängig von dem jeweiligen Differenzwert stets derselbe ist. Im Fall der vorliegenden Offenbarung hängt die Verstärkung zumindest für einen Teil der Differenzwerte davon ab, wie groß der jeweilige Differenzwert ist.

In einer Ausführungsform der vorliegenden Offenbarung werden nur positive Differenzwerte verstärkt, wobei zumindest ein Teil der positiven Differenzwerte nicht-linear verstärkt wird.

In einer Ausführungsform der vorliegenden Offenbarung werden negative Differenzwerte und positive Differenzwerte verstärkt, wobei zumindest ein Teil der positiven Differenzwerte nicht-linear verstärkt wird.

In einer Ausführungsform der vorliegenden Offenbarung werden negative Differenzwerte und positive Differenzwerte verstärkt, wobei zumindest ein Teil der positiven Differenzwerte und zumindest ein Teil der negativen Differenzwerte nicht-linear verstärkt werden.

In einer Ausführungsform der vorliegenden Offenbarung kann jedem Differenzwert ein Verstärkungsfaktor zugeordnet werden. Das bedeutet, dass die Verstärkung nur von dem jeweiligen Differenzwert abhängig ist und nicht von dem Bildelement abhängig ist, das den Differenzwert aufweist.

In einer Ausführungsform der vorliegenden Offenbarung gibt es einen oberen positiven Differenzwert und Differenzwerte oberhalb des oberen positiven Differenzwertes werden linear verstärkt. Dabei bezieht sich der Begriff "oberer Differenzwert" auf die Größe des Differenzwertes. Differenzwerte oberhalb des oberen Differenzwertes sind solche Differenzwerte, die größer als der obere Differenzwert sind.

In einer Ausführungsform der vorliegenden Offenbarung bleiben Differenzwerte von Null unverändert, d.h. sie werden nicht verstärkt, sondern bleiben Null.

In einer Ausführungsform der vorliegenden Offenbarung gibt es einen oberen positiven Differenzwert und Differenzwerte zwischen dem Differenzwert Null und dem oberen positiven Differenzwert werden nicht-linear verstärkt. Differenzwerte zwischen dem Differenzwert Null und dem oberen positiven Differenzwert sind solche Differenzwerte, die größer als Null und kleiner als der obere positive Differenzwert sind.

In einer Ausführungsform der vorliegenden Offenbarung ist die Verstärkung oberhalb eines oberen positiven Differenzwerts linear und in einem Bereich zwischen dem Differenzwert Null und dem oberen positiven Differenzwert nicht-linear und geringer (kleiner) als die lineare Verstärkung. Das bedeutet, dass der nicht-linear verstärkte Differenzwert kleiner ist, als wenn er linear verstärkt werden würde.

In einer Ausführungsform der vorliegenden Offenbarung ist die Verstärkung oberhalb eines oberen positiven Differenzwerts linear und in einem Bereich zwischen dem Differenzwert Null und dem oberen positiven Differenzwert nicht-linear und größer als die lineare Verstärkung. Das bedeutet, dass der nicht-linear verstärkte Differenzwert größer ist, als wenn er linear verstärkt werden würde.

In einer Ausführungsform der vorliegenden Offenbarung gibt es einen unteren negativen Differenzwert und Differenzwerte zwischen dem Differenzwert Null und dem unteren negativen Differenzwert werden nicht-linear verstärkt. Dabei bezieht sich der Begriff "unterer negativer Differenzwert" auf die Größe des Differenzwertes. Differenzwerte unterhalb des unteren negativen Differenzwertes sind solche Differenzwerte, deren Betrag (Absolutwert) größer als der

Betrag des unteren negativen Differenzwertes ist.

In einer Ausführungsform der vorliegenden Offenbarung ist die Verstärkung unterhalb eines unteren negativen Differenzwerts linear und in einem Bereich zwischen dem unteren negativen Differenzwert und dem Differenzwert Null nicht-linear und geringer als die lineare Verstärkung. Das bedeutet, dass der Betrag des nicht-linear verstärkten Differenzwertes kleiner ist als der Betrag des entsprechend linear verstärkten Differenzwertes.

In einer Ausführungsform der vorliegenden Offenbarung ist die Verstärkung unterhalb eines unteren negativen Differenzwerts linear und in einem Bereich zwischen dem Differenzwert unteren negativen Differenzwert und dem Differenzwert Null nicht-linear und größer als die lineare Verstärkung. Das bedeutet, dass der Betrag des nicht-linear verstärkten Differenzwertes größer ist als der Betrag des entsprechend linear verstärkten Differenzwertes.

In einer Ausführungsform der vorliegenden Offenbarung werden alle negativen Differenzwerte nicht-linear verstärkt.

In einer Ausführungsform der vorliegenden Offenbarung werden alle Differenzwerte mit einem Faktor verstärkt, der abhängig vom jeweiligen Differenzwert und größer oder gleich eins ist.

In einer Ausführungsform der vorliegenden Offenbarung werden alle positiven Differenzwerte mit einem Faktor verstärkt, wobei der Faktor für den Differenzwert Null und für einen oberen Differenzwert einen Maximalwert annimmt, und für einen Differenzwert, der zwischen dem Differenzwert Null und dem oberen Differenzwert liegt, einen Minimalwert annimmt.

In einer Ausführungsform der vorliegenden Offenbarung werden alle negativen Differenzwerte mit einem Faktor verstärkt, wobei der Faktor für den Differenzwert Null und für einen unteren Differenzwert einen Maximalwert annimmt, und für einen Differenzwert, der zwischen dem Differenzwert Null und dem unteren Differenzwert liegt, einen Minimalwert annimmt.

In einer Ausführungsform der vorliegenden Offenbarung werden alle Differenzwerte mit einem Faktor verstärkt, wobei der Faktor für den Differenzwert Null und für einen absoluten Differenzwert einen Maximalwert annimmt, und für einen absoluten Differenzwert, der zwischen dem Differenzwert Null und dem unteren Differenzwert liegt, einen Minimalwert annimmt.

In einer Ausführungsform der vorliegenden Offenbarung werden alle Differenzwerte nicht-linear verstärkt.

In einer Ausführungsform der vorliegenden Offenbarung wird ein definierter Anteil von Differenzwerten nicht-linear verstärkt, während die übrigen Differenzwerte linear verstärkt werden.

In einer Ausführungsform der vorliegenden Offenbarung werden die Differenzwerte des oberen p-Quantils der positiven Differenzwerte linear verstärkt, während die Differenzwerte des unteren p-Quantils der positiven Differenzwerte nicht-linear verstärkt werden. Dabei kann p einen Wert im Bereich von 0,5 bis 0,99 annehmen. In einer Ausführungsform der vorliegenden Offenbarung liegt p im Bereich von 0,6 bis 0,99. In einer Ausführungsform der vorliegenden Offenbarung liegt p im Bereich von 0,7 bis 0,99. In einer Ausführungsform der vorliegenden Offenbarung liegt p im Bereich von 0,8 bis 0,99. In einer Ausführungsform der vorliegenden Offenbarung liegt p im Bereich von 0,9 bis 0,99. In einer Ausführungsform der vorliegenden Offenbarung liegt p im Bereich von 0,95 bis 0,99.

In einer Ausführungsform der vorliegenden Offenbarung werden die Differenzwerte des oberen p-Quantils der absoluten Differenzwerte linear verstärkt, während die Differenzwerte des unteren p-Quantils der absoluten Differenzwerte nicht-linear verstärkt werden. Dabei kann p einen Wert im Bereich von 0,5 bis 0,99 annehmen. In einer Ausführungsform der vorliegenden Offenbarung liegt p im Bereich von 0,6 bis 0,99. In einer Ausführungsform der vorliegenden Offenbarung liegt p im Bereich von 0,7 bis 0,99. In einer Ausführungsform der vorliegenden Offenbarung liegt p im Bereich von 0,8 bis 0,99. In einer Ausführungsform der vorliegenden Offenbarung liegt p im Bereich von 0,9 bis 0,99. In einer Ausführungsform der vorliegenden Offenbarung liegt p im Bereich von 0,95 bis 0,99.

Zur Bildung eines p-Quantils können alle Differenzwerte der Größe nach sortiert werden. Bei negativen Differenzwerten kann vor der Sortierung der Absolutwert (Betrag) gebildet werden. Bei einem p-Quantil mit p=0,5 werden die Differenzwerte in zwei Gruppen eingeteilt. Jede Gruppe umfasst 50% der Differenzwerte. Alle Differenzwerte innerhalb des unteren 0,5-Quantils sind kleiner als der kleinste Differenzwert des oberen 0,5-Quantils. Alle Differenzwerte innerhalb des oberen 0,5-Quantils sind größer als der größte Differenzwert des unteren 0,5-Quantils. Bei einem p-Quantil mit p=0,99 werden die Differenzwerte ebenfalls in zwei Gruppen eingeteilt. Das untere 0,99-Quantil umfasst 99% der Differenzwerte. Das obere 0,99-Quantil umfasst 1% der Differenzwerte. Alle Differenzwerte innerhalb des unteren 0,99-Quantils sind kleiner als der kleinste Differenzwert des oberen 0,99-Quantils. Alle Differenzwerte innerhalb des oberen 0,99-Quantils sind größer als der größte Differenzwert des unteren 0,99-Quantils.

In einer Ausführungsform der vorliegenden Offenbarung werden die Differenzwerte mit einer Verstärkungsfunktion verstärkt, wobei die Verstärkungsfunktion zumindest innerhalb eines Bereichs von Differenzwerten eine Potenzfunktion des jeweiligen Differenzwertes umfasst.

In einer Ausführungsform der vorliegenden Offenbarung werden die Differenzwerte mittels einer Verstärkungsfunktion verstärkt, wobei die Verstärkungsfunktion zumindest innerhalb eines Bereichs von Differenzwerten eine stetige und stetig differenzierbare Funktion ist.

In einer Ausführungsform der vorliegenden Offenbarung werden die Differenzwerte mittels einer Verstärkungsfunktion verstärkt, wobei die Verstärkungsfunktion innerhalb eines Bereichs, der sich von einem unteren negativen Differenzwert zu einem oberen positiven Differenzwert erstreckt, eine stetige und stetig differenzierbare Funktion ist.

In einer Ausführungsform der vorliegenden Offenbarung werden die Differenzwerte zumindest anteilig mittels einer Verstärkungsfunktion verstärkt. Die Verstärkungsfunktion umfasst eine Verstärkungsfunktion $f^{(+)}$, die positive Differenzwerte verstärkt und eine Verstärkungsfunktion $f^{(-)}$, die negative Differenzwerte verstärkt, wobei gilt:

$$f^{(-)}(d^{(-)}) = -f^{(+)}(|d^{(-)}|) \qquad (1)$$

Dabei ist $d^{(-)}$ ein negativer Differenzwert und $|d^{(-)}|$ der Betrag des negativen Differenzwerts. Mit anderen Worten: um den verstärkten Wert eines negativen Differenzwerts ($d^{(-)} < 0$) mit der Verstärkungsfunktion $f^{(-)}$ zu ermitteln, kann man auch den Betrag $|d^{(-)}|$ des negativen Differenzwerts bilden, auf diesen die Verstärkungsfunktion $f^{(+)}$ anwenden, und das Ergebnis mit dem Faktor -1 multiplizieren.

In einer Ausführungsform der vorliegenden Offenbarung werden die Differenzwerte innerhalb eines Bereichs von Differenzwerten mit einer Verstärkungsfunktion verstärkt, wobei die Verstärkungsfunktion die folgende Form hat:

$$f^{(+)} = \beta^{(+)} \cdot d^{(+)} \cdot \left(\frac{d^{(+)}}{d_{max}^{(+)}}\right)^{\gamma^{(+)}} + \delta^{(+)} \qquad (2a)$$

$$f^{(-)} = \beta^{(-)} \cdot d^{(-)} \cdot \left(\frac{|d^{(-)}|}{|d^{(-)}|_{max}}\right)^{\gamma^{(-)}} + \delta^{(-)} \qquad (2b)$$

$f^{(+)}$ ist eine Verstärkungsfunktion, die positive Differenzwerte verstärkt. $f^{(-)}$ ist eine Verstärkungsfunktion, die negative Differenzwerte verstärkt.

$\beta^{(+)}$ und $\beta^{(-)}$ sind Faktoren, die üblicherweise größer als 1 sind. $\beta^{(+)}$ und $\beta^{(-)}$ können beispielsweise einen Wert zwischen 1 und 10 annehmen. Sie können auch größer als 10 sein. In einer Ausführungsform sind $\beta^{(+)}$ und $\beta^{(-)}$ Faktoren im Bereich von 1 bis 5. In einer Ausführungsform sind $\beta^{(+)}$ und $\beta^{(-)}$ Faktoren im Bereich von 1 bis 4. In einer Ausführungsform sind $\beta^{(+)}$ und $\beta^{(-)}$ Faktoren im Bereich von 1 bis 3. In einer Ausführungsform sind $\beta^{(+)}$ und $\beta^{(-)}$ Faktoren im Bereich von 1 bis 2,5. In einer Ausführungsform sind $\beta^{(+)}$ und $\beta^{(-)}$ Faktoren im Bereich von 1 bis 2. $\beta^{(+)}$ und $\beta^{(-)}$ können gleich oder verschieden sein. In einer Ausführungsform sind $\beta^{(+)}$ und $\beta^{(-)}$ gleich.

$d^{(+)}$ ist ein positiver Differenzwert, der verstärkt wird. $d_{max}^{(+)}$ ist der maximale positive Differenzwert, der in dem Bereich von Differenzwerten auftritt.

Der Quotient $\left(\frac{d^{(+)}}{d_{max}^{(+)}}\right)$ nimmt den Wert 1 an, wenn der positive Differenzwert $d^{(+)}$, der verstärkt wird, gleich dem maximalen positiven Differenzwert $d_{max}^{(+)}$ ist, ansonsten ist der Quotient kleiner als 1 und größer als 0. $d^{(-)}$ ist ein negativer Differenzwert, der verstärkt wird. $|d^{(-)}|$ ist der Betrag (Absolutwert) des negativen Differenzwerts. $|d^{(-)}|_{max}$ ist der maximale Betrag, der in dem Bereich von negativen Differenzwerten auftritt.

Der Quotient ($\frac{|d^{(-)}|}{|d^{(-)}|_{max}}$) nimmt den Wert 1 an, wenn der negative Differenzwert $d^{(-)}$, der verstärkt wird, gleich dem maximalen Betrag $|d^{(-)}|_{max}$ ist, ansonsten ist der Quotient kleiner als 1 und größer als 0.

Die Werte $d_{max}^{(+)}$ und $|d^{(-)}|_{max}$ können absolute Werte sein, die vorab z.B. von einem Nutzer festgelegt werden. Die Werte $d_{max}^{(+)}$ und $|d^{(-)}|_{max}$ können Werte sein, die aus den vorliegenden Differenzwerten berechnet werden (z.B. durch die Ermittlung von p-Quantilen wie oben beschrieben).

$\gamma^{(+)}$ und $\gamma^{(-)}$ sind Exponenten, die üblicherweise positive reelle Werte annehmen können. Sind $\gamma^{(+)}$ und $\gamma^{(-)}$ gleich

1, so liegt eine lineare Verstärkung vor. Sind $\gamma^{(+)}$ und $\gamma^{(-)}$ größer als Null und kleiner als 1, so ist die Verstärkung in dem betrachteten Bereich von Differenzwerten größer als die lineare Verstärkung. Sind $\gamma^{(+)}$ und $\gamma^{(-)}$ größer als 1, so ist die Verstärkung in dem betrachteten Bereich von Differenzwerten kleiner als die lineare Verstärkung. $\gamma^{(+)}$ und $\gamma^{(-)}$ können gleich oder verschieden sein. In einer Ausführungsform sind $\gamma^{(+)}$ und $\gamma^{(-)}$ gleich. In einer Ausführungsform sind $\gamma^{(+)}$ und $\gamma^{(-)}$ größer als 1. $\gamma^{(+)}$ und $\gamma^{(-)}$ können beispielsweise einen Wert im Bereich von 1,1 bis 3, oder einen Wert im Bereich von 1,2 bis 2,9, oder einen Wert im Bereich von 1,3 bis 2,8, oder einen Wert im Bereich von 1,4 bis 2,7, oder einen Wert im Bereich von 1,5 bis 2,6 annehmen.

$\delta^{(+)}$ und $\delta^{(-)}$ sind positive oder negative reelle Werte. $\delta^{(+)}$ und $\delta^{(-)}$ können auch Null sein. $\delta^{(+)}$ und $\delta^{(-)}$ können gleich oder verschieden sein. In einer Ausführungsform sind $\delta^{(+)}$ und $\delta^{(-)}$ gleich.

Fig. 1 zeigt beispielhaft und schematisch eine nicht-lineare Verstärkung gemäß der vorliegenden Offenbarung.

Differenzwerte *d* werden mittels einer Verstärkungsfunktion *f*(*d*) verstärkt. In Fig. 1 sind die verstärkten Differenzwerte als Funktion *f*(*d*) der Differenzwerte d in einer grafischen Darstellung in einem kartesischen Koordinatensystem aufgetragen.

In dem in Fig. 1 gezeigten Beispiel werden negative Differenzwerte ($d < 0$) linear verstärkt. Der Verstärkungsfaktor beträgt in dem gezeigten Beispiel 1, 6. Aus dem Differenzwert $d$ = -300 wird beispielsweise der verstärkte Differenzwert - 300 · $1,\overline{6}$ = 5 0 0.

Positive Differenzwerte oberhalb eines oberen positiven Differenzwerts $d_{max}$ werden ebenfalls linear verstärkt; auch in diesem Bereich von Differenzwerten beträgt der Verstärkungsfaktor in dem gezeigten Beispiel 1, 6. Aus dem Differenzwert $d$ = 900 wird beispielsweise der verstärkte Differenzwert 900 ▪ 1,6 = 1500.

In einem Bereich zwischen dem Differenzwert Null ($d = 0$) und dem oberen positiven Differenzwerts $d_{max}$ werden die Differenzwerte nicht-linear verstärkt. Der Verstärkungsfaktor ist in diesem Bereich nicht konstant; er ist abhängig von dem jeweiligen Differenzwert. In dem gezeigten Beispiel ist die nicht-lineare Verstärkung geringer als die lineare Verstärkung oberhalb des oberen positiven Differenzwerts $d_{max}$ und im Bereich der negativen Differenzwerte. Die gestrichelte Linie zeigt die lineare Verstärkung an.

Fig. 2 zeigt schematisch ein weiteres Beispiel einer nicht-linearen Verstärkung gemäß der vorliegenden Offenbarung.

Differenzwerte *d* werden mittels einer Verstärkungsfunktion *f*(*d*) verstärkt. In Fig. 2 sind die verstärkten Differenzwerte als Funktion *f*(*d*) der Differenzwerte d in einer grafischen Darstellung in einem kartesischen Koordinatensystem aufgetragen.

In dem in Fig. 2 gezeigten Beispiel werden positive Differenzwerte oberhalb eines oberen positiven Differenzwerts $d_{max}$ linear verstärkt. In diesem Bereich von Differenzwerten beträgt der Verstärkungsfaktor in dem gezeigten Beispiel 1, 6. Aus dem Differenzwert $d$ = 900 wird beispielsweise der verstärkte Differenzwert 900 · $1,\overline{6}$ = 1500.

In einem Bereich zwischen dem Differenzwert Null (d = 0) und dem oberen positiven Differenzwerts $d_{max}$ werden die Differenzwerte nicht-linear verstärkt. Der Verstärkungsfaktor ist in diesem Bereich nicht konstant; er ist abhängig von dem jeweiligen Differenzwert. In dem gezeigten Beispiel ist die nicht-lineare Verstärkung geringer als die lineare Verstärkung oberhalb des oberen positiven Differenzwerts $d_{max}$. Die gestrichelte Linie zeigt die lineare Verstärkung an. Eine lineare Verstärkung des Differenzwerts d = 300 würde einen verstärkten Differenzwert von 300 · $1,\overline{6}$ = 500 ergeben, der verstärkte Differenzwert ist jedoch geringer als 500 (er beträgt etwa 322).

In dem gezeigten Beispiel werden negative Differenzwerte ($d < 0$) ebenfalls nicht-linear verstärkt. Auch im Bereich der negativen Differenzwerte ist die Verstärkung geringer als die lineare Verstärkung (dargestellt durch die gestrichelte Linie). Eine lineare Verstärkung des Differenzwerts $d$ = -300 würde einen verstärkten Differenzwert von -300 · $1,\overline{6}$ = -500 ergeben, der verstärkte Differenzwert ist jedoch geringer als -500 (beachte, dass sich der Begriff "Verstärkung" wie oben beschrieben, auf den Absolutwert bezieht; d.h. in dem gezeigten Beispiel würde sich ein Wert von etwa -322 ergeben: |-322| < |-500|).

In dem gezeigten Beispiel gilt: $f^{(-)}(d^{(-)}) = -f^{(+)}(|d^{(-)}|)$, d.h., negative Differenzwerte werden betragsmäßig in der gleichen Weise verstärkt, wie positive Differenzwerte.

Die zumindest über einen Teil der Differenzwerte nicht-linear verstärkte dritte Repräsentation wird in dieser Beschreibung auch als verstärkte dritte Repräsentation bezeichnet. Die vierte Repräsentation kann die verstärkte dritte Repräsentation sein.

In einer Ausführungsform der vorliegenden Offenbarung umfasst das Erzeugen der vierten Repräsentation ferner das Multiplizieren der dritten Repräsentation und/oder der verstärkten dritten Repräsentation mit einer frequenzabhängigen Gewichtsfunktion im Frequenzraum.

Das Multiplizieren der dritten Repräsentation und/oder der verstärkten dritten Repräsentation mit einer frequenzabhängigen Gewichtsfunktion im Frequenzraum kann als Filter betrachtet werden, der je nach Gewichtsfunktion zu einer Verstärkung und/oder Unterdrückung von Frequenzen führt. Werden beispielsweise niedrige Frequenzen höher gewichtet als hohe Frequenzen, liegt ein Tiefpassfilter vor. Werden beispielsweise hohe Frequenzen höher gewichtet als niedrige Frequenzen, liegt ein Hochpassfilter vor.

Das Multiplizieren der dritten Repräsentation und/oder der verstärkten dritten Repräsentation mit einer frequenzabhängigen Gewichtsfunktion wird im Frequenzraum durchgeführt. Liegen die dritte Repräsentation und/oder die verstärkte dritte Repräsentation nicht im Frequenzraum, sondern beispielsweise im Ortsraum vor, so können sie durch eine Transformation, beispielsweise eine Fourier-Transformation in die entsprechende Frequenzraum-Repräsentation überführt werden.

Bei der Multiplikation wird jeder Amplitudenwert/Phasenwert jeder Frequenz der Frequenzraum-Repräsentation mit einem frequenzabhängigen Gewichtungsfaktor multipliziert.

Vorzugsweise nehmen die Gewichtungsfaktoren mit zunehmender Frequenz ab. Mit anderen Worten: Vorzugsweise werden niedrige Frequenzen mit einem höheren Gewichtungsfaktor multipliziert als niedrige Frequenzen. Vorzugsweise ist der jeweilige Gewichtungsfaktor umso größer, je niedriger die Frequenz ist.

Kontrastinformationen werden in einer Frequenzraumdarstellung durch niedrige Frequenzen repräsentiert, während die höheren Frequenzen Informationen zu Feinstrukturen repräsentieren. Durch eine höhere Gewichtung niedriger Frequenzen werden somit diejenigen Frequenzen, die einen höheren Beitrag zum Kontrast leisten, mit einem höheren Gewicht versehen werden als diejenigen Frequenzen, die einen geringeren Beitrag zum Kontrast leisten. Bildrauschen ist typischerweise in der Frequenzdarstellung gleichverteilt. Die frequenzabhängige Gewichtsfunktion hat die Wirkung eines Filters. Der Filter erhöht das Signal-zu-Rauschen-Verhältnis, da die spektrale Rauschdichte für hohe Frequenzen verringert wird.

Bevorzugte Gewichtsfunktionen sind Gauß-Funktion, Hann-Funktion (auch als Hann Window bezeichnet) und Poisson-Funktion (Poisson Window).

Beispiele für weitere Gewichtsfunktionen sind zum Beispiel zu finden unter https://de.wikipedia.org/wiki/Fensterfunktion#Beispiele_von_Fensterfunktionen; F.J. Harris et al.: On the Use of Windows for Harmonie Analysis with the Discrete Fourier Transform, Proceedings oft he IEEE, VoL. 66, N. 1, 1978; https://docs.scipy.org/doc/scipy/reference/signal.windows.html; K. M. M Prabhu: Window Functions and Their Applications in Signal Processing, CRC Press, 2014, 978-1-4665-1583-3).

Die frequenzabhängige Gewichtung ist auch in WO2024/052156A1 beschrieben. Die in WO2024/052156A1 offenbarten Gewichtsfunktionen können auch zur Filterung der hierein beschriebenen Repräsentationen verwendet werden.

Alternativ oder zusätzlich zur frequenzabhängigen Gewichtung können auch andere/weitere Filterungen vorgenommen werden.

Auf Basis der vierten Repräsentation wird eine synthetische kontrastverstärkte Repräsentation des Untersuchungsbereichs des Untersuchungsobjekts erzeugt. Das Erzeugen der synthetischen kontrastverstärkten Repräsentation umfasst eine Addition der vierten Repräsentation zu der ersten Repräsentation oder zu der zweiten Repräsentation. Die Addition kann beispielsweise im Ortsraum oder im Frequenzraum durchgeführt werden. Wird die Addition im Ortsraum durchgeführt, werden die den Bildelementen der vierten Repräsentation zugeordneten Werte Bildelement für Bildelement zu den Farbwerten oder Grauwerten der korrespondierenden Bildelemente der ersten Repräsentation oder der zweiten Repräsentation addiert. Korrespondierende Bildelemente sind solche, die denselben Teilbereich des Untersuchungsbereich repräsentieren.

Es ist möglich, die Farbwerte oder Grauwerte der synthetischen kontrastverstärkten Repräsentation zu normalisieren.

Die synthetische kontrastverstärkte Repräsentation repräsentiert den Untersuchungsbereich des Untersuchungsobjekts nach Applikation einer dritten Menge des Kontrastmittels. Die dritte Menge ist üblicherweise größer als die erste Menge und die zweite Menge.

In einer Ausführungsform der vorliegenden Offenbarung sind die erste Menge und die zweite Menge kleiner als die Standardmenge und die dritte Menge ist gleich der Standardmenge oder größer als die Standardmenge.

In einer Ausführungsform ist die erste Menge kleiner als die Standardmenge (zum Beispiel Null), die zweite Menge entspricht der Standardmenge und die dritte Menge ist größer als die Standardmenge.

Liegt die synthetische kontrastverstärkte Repräsentation nicht in einer Ortsraumdarstellung vor, sondern beispielsweise in einer Frequenzraumdarstellung, kann sie durch eine Transformation, beispielsweise einer inversen Fourier-Transformation in eine Ortsraumdarstellung überführt werden.

Die synthetische kontrastverstärkte Repräsentation kann ausgegeben, d.h. auf einem Monitor angezeigt und/oder mittels eines Druckers ausgedruckt und/oder in einem Datenspeicher gespeichert werden. Die synthetische kontrastverstärkte Repräsentation kann an ein separates Computersystem übermittelt werden.

Fig. 3 zeigt beispielhaft und schematisch eine Erzeugung einer synthetischen kontrastverstärkten Repräsentation.

Die Erzeugung der synthetischen kontrastverstärkten Repräsentation SR basiert auf einer ersten Repräsentation R1 und einer zweiten Repräsentation R2. In dem in Fig. 3 gezeigten Beispiel handelt es sich bei der ersten Repräsentation R1 und der zweiten Repräsentation R2 um MRT-Aufnahmen eines Menschen. Der Untersuchungsbereich umfasst einen Schnitt durch das Abdomen; es ist unter anderem eine Leber zu erkennen.

Die erste Repräsentation R1 repräsentiert den Untersuchungsbereich ohne Kontrastmittel. Die zweite Repräsentation R2 repräsentiert den Untersuchungsbereich nach Applikation einer Menge eines hepatobiliären MRT-Kontrastmittels.

Auf Basis der ersten Repräsentation R1 und der zweiten Repräsentation R2 wird eine dritte Repräsentation R3 erzeugt. Das Erzeugen der dritten Repräsentation R3 umfasst ein Subtrahieren der ersten Repräsentation R1 von der zweiten Repräsentation R2. In dem in Fig. 3 gezeigten Beispiel wird die Subtraktion im Ortsraum durchgeführt. Wie beschrieben ist es möglich, die Subtraktion auch in einem anderen Raum durchzuführen, z.B. im Frequenzraum. Bei der Subtraktion werden die Grauwerte korrespondierender Bildelemente voneinander subtrahiert. Korrespondierende Bildelemente sind solche, die denselben Teilbereich des Untersuchungsbereichs repräsentieren.

Auch die dritte Repräsentation R3 umfasst eine Vielzahl an Bildelementen. Jedem Bildelement ist ein Differenzwert zugeordnet. Die Differenzwerte ergeben sich aus der Subtraktion der Grauwerte der Bildelemente der ersten Repräsentation R1 von den Grauwerte der korrespondierenden Bildelemente der zweiten Repräsentation R2.

In einem weiteren Schritt werden die Differenzwerte verstärkt. Dabei gibt es mindestens einen Bereich an Differenzwerten, der nicht-linear verstärkt wird. Die zumindest anteilige nicht-lineare Verstärkung der Differenzwerte wird in Fig. 3 durch den Kasten mit der Beschriftung NLE repräsentiert. Beispiele für eine zumindest anteilige nicht-linear Verstärkung von Differenzwerten sind in den Figuren 1 und 2 dargestellt. Die zumindest anteilige nicht-lineare Verstärkung der Differenzwerte erfolgt im Ortsraum.

An die zumindest anteilige nicht-lineare Verstärkung NLE der Differenzwerte schließt sich ein Tiefpassfilter LPF an. Bei diesem Tiefpassfilter LPF werden die Amplituden- und/oder Phasenwerte einer Frequenzraumdarstellung der zumindest anteilig nicht-linear verstärkten Repräsentation mit einer frequenzabhängigen Gewichtsfunktion multipliziert, bei der niedrige Frequenz höher gewichtet werden als hohe Frequenzen. In Fig. 3 wird der Tiefpassfilter durch den Kasten mit der Beschriftung LPF repräsentiert.

In dem in Fig. 3 gezeigten Beispiel erfolgt zunächst die zumindest anteilige nicht-lineare Verstärkung NLE und dann die Tiefpassfilterung LPF. Es ist auch möglich, dass der Tiefpassfilter (und/oder ein anderer Filter und/oder ein weiterer Filter) auf die dritte Repräsentation R3 angewandt wird, bevor das Ergebnis der Filterung zumindest anteilig nicht-linear verstärkt wird.

In einem weiteren Schritt wird das Ergebnis der zumindest anteilig nicht-linearen Verstärkung und Tiefpassfilterung auf die erste Repräsentation R1 addiert. Dieser Schritt kann im Ortsraum oder im Frequenzraum durchgeführt werden. In dem in Fig. 3 gezeigten Beispiel wird er im Ortsraum durchgeführt. Das Ergebnis ist eine synthetische kontrastverstärkte Repräsentation SR des Untersuchungsbereichs des Untersuchungsobjekts. Die synthetische kontrastverstärkte Repräsentation SR repräsentiert den Untersuchungsbereichs des Untersuchungsobjekts nach Applikation einer Menge des hepatobiliären Kontrastmittels, die größer ist als im Fall der zweiten Repräsentation R2.

Damit erlauben die Gegenstände der vorliegenden Offenbarung die Erzeugung einer synthetischen kontrastverstärkten Repräsentation eines Untersuchungsbereichs eines Untersuchungsobjekts, die den Untersuchungsbereich des Untersuchungsobjekts nach Applikation einer Menge eines Kontrastmittels repräsentieren, die größer ist als diejenige, die tatsächlich appliziert worden ist. Damit kann entweder Kontrastmittel eingespart werden, oder es können synthetische kontrastverstärkte Repräsentationen erzeugt werden, die den Untersuchungsbereich des Untersuchungsobjekts nach Applikation einer Menge eines Kontrastmittels repräsentieren, die größer als die Menge ist, die man einem üblicherweise applizieren würde.

Eine gemäß der vorliegenden Offenbarung erzeugte synthetische kontrastverstärkte Repräsentation weist ein größeres Kontrast-Rausch-Verhältnis auf als synthetische kontrastverstärkte Repräsentationen, die gemäß den in WO2024/100233A1 und WO2024/052156A1 offenbarten Verfahren erzeugt wurden. Dies ist beispielhaft weiter hinten in der Beschreibung gezeigt.

Fig. 4 zeigt beispielhaft und schematisch ein Verfahren zum Erzeugen einer synthetischen kontrastverstärkten Repräsentation in Form eines Ablaufdiagramms.

Das Verfahren (100) umfasst die Schritte:

(110) Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,

(120) Bereitstellen einer zweiten Repräsentation, wobei die zweite Repräsentation den Untersuchungsbereich des Untersuchungsobjekts nach Applikation einer zweiten Menge des Kontrastmittels repräsentiert,

(130) Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,

(140) Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,

(150) Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,

(160) Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Fig. 5 zeigt beispielhaft und schematisch ein Computersystem gemäß der vorliegenden Offenbarung.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Das in Fig. 5 gezeigte Computersystem (1) umfasst eine Empfangseinheit (10), eine Steuer- und Recheneinheit (20) und eine Ausgabeeinheit (30).

Die Steuer- und Recheneinheit (20) dient der Steuerung des Computersystems (1), der Koordinierung der Datenflüsse zwischen den Einheiten des Computersystems (1) und der Durchführung von Berechnungen.

Die Steuer- und Recheneinheit (20) ist konfiguriert:

- eine erste Repräsentation bereitzustellen und/oder die Empfangseinheit (10) zu veranlassen, eine erste Repräsentation zu empfangen, wobei die erste Repräsentation einen Untersuchungsbereich eines Untersuchungsobjekts ohne Kontrastmittel oder nach Applikation einer ersten Menge eines Kontrastmittels repräsentiert,

- eine zweite Repräsentation bereitzustellen und/oder die Empfangseinheit (10) zu veranlassen, eine zweite Repräsentation zu empfangen, wobei die zweite Repräsentation den Untersuchungsbereich des Untersuchungsobjekts nach Applikation einer zweiten Menge des Kontrastmittels repräsentiert,

- eine dritte Repräsentation des Untersuchungsbereichs des Untersuchungsobjekts auf Basis der ersten Repräsentation und der zweiten Repräsentation zu erzeugen, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,

- eine vierte Repräsentation des Untersuchungsbereichs des Untersuchungsobjekts zu erzeugen, wobei das Erzeugen der vierten Repräsentation eine nicht-lineare Verstärkung zumindest eines Teils der Differenzwerte der dritten Repräsentation umfasst,

- eine synthetische kontrastverstärkte Repräsentation des Untersuchungsbereichs des Untersuchungsobjekts zu erzeugen, wobei das Erzeugen der synthetischen kontrastverstärkten Repräsentation ein Addieren der vierten Repräsentation zu der ersten Repräsentation oder zu der zweiten Repräsentation umfasst,

- die synthetische kontrastverstärkte Repräsentation des Untersuchungsbereichs des Untersuchungsobjekts zu speichern oder die Ausgabeeinheit (30) zu veranlassen, die synthetische kontrastverstärkte Repräsentation auszugeben und/oder an ein separates Computersystem zu übermitteln.

Fig. 6 zeigt beispielhaft und schematisch eine weitere Ausführungsform des Computersystems. Das Computersystem (1) umfasst eine Verarbeitungseinheit (21), die mit einem Speicher (22) verbunden ist. Die Verarbeitungseinheit (21) und der Speicher (22) bilden eine Steuer- und Recheneinheit, wie sie in Fig. 5 gezeigt ist.

Die Verarbeitungseinheit (21) (engl.: *processing unit*) kann einen oder mehrere Prozessoren allein oder in Kombination mit einem oder mehreren Speichern umfassen. Bei der Verarbeitungseinheit (21) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (21) besteht üblicherweise

aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (21) kann konfiguriert sein, Computerprogramme auszuführen, die in einem Arbeitsspeicher der Verarbeitungseinheit (21) oder im Speicher (22) desselben oder eines anderen Computersystems gespeichert sein können.

Der Speicher (22) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (22) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-Lese-Speicher (CD-ROM), Compact Discs mit Lese-/Schreibfunktion (CD-R/W), DVDs, Blu-ray-Discs und ähnliche gehören.

Zusätzlich zum Speicher (22) kann die Verarbeitungseinheit (21) auch mit einer oder mehreren Schnittstellen (11, 12, 31, 32, 33) verbunden sein, um Informationen anzuzeigen, zu übertragen und/oder zu empfangen. Die Schnittstellen können eine oder mehrere Kommunikationsschnittstellen (11, 32, 33) und/oder eine oder mehrere Benutzerschnittstellen (12, 31) umfassen. Die eine oder mehrere Kommunikationsschnittstellen können so konfiguriert sein, dass sie Informationen senden und/oder empfangen, z.B. zu und/oder von einer MRT-Scanner, einem CT-Scanner, einer Ultraschallkamera, anderen Computersystemen, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen können eine Anzeige (31) umfassen. Eine Anzeige (31) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (40) können im Speicher (22) gespeichert sein und von der Verarbeitungseinheit (21) ausgeführt werden, die dadurch programmiert wird, die in dieser Beschreibung beschriebenen Funktionen zu erfüllen. Das Abrufen, Laden und Ausführen von Anweisungen des Computerprogramms (40) kann sequenziell erfolgen, so dass jeweils ein Befehl abgerufen, geladen und ausgeführt wird. Das Abrufen, Laden und/oder Ausführen kann aber auch parallel erfolgen.

Das Computersystem der vorliegenden Offenbarung kann als Laptop, Notebook, Netbook und/der Tablet-PC ausgeführt sein, es kann auch ein Bestandteil eines MRT-Scanners, eines CT-Scanners, eines PET-Scanners oder eines Ultraschalldiagnosegeräts sein.

Gegenstand der vorliegenden Erfindung ist auch ein Computerprogrammprodukt. Ein solches Computerprogrammprodukt umfasst einen nichtflüchtigen Datenträger wie beispielsweise eine CD, eine DVD, ein USB-Stick oder ein anderes Medium zum Speichern von Daten. Auf dem Datenträger ist ein Computerprogramm gespeichert. Das Computerprogramm kann in einen Arbeitsspeicher eines Computersystems (insbesondere in einen Arbeitsspeicher eines Computersystems der vorliegenden Offenbarung) geladen werden und dort das Computersystem dazu veranlassen, folgende Schritte ausführen:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,

- Bereitstellen einer zweiten Repräsentation, wobei die zweite Repräsentation den Untersuchungsbereich des Untersuchungsobjekts nach Applikation einer zweiten Menge des Kontrastmittels repräsentiert,

- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,

- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,

- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,

- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

Das Computerprogramm kann auch als Download z.B. über eine Internetseite und/oder einen App-Store als Computerprogrammprodukt zum Kauf angeboten werden.

Das Computerprogrammprodukt kann auch in Kombination (in einer Zusammenstellung) mit dem Kontrastmittel vermarktet werden. Eine solche Zusammenstellung wird auch als Kit bezeichnet. Ein solches Kit umfasst das Kontrastmittel und das Computerprogrammprodukt. Es ist auch möglich, dass ein solches Kit das Kontrastmittel und Mittel umfasst, die es einen Käufer erlauben, das Computerprogramm zu beziehen, z.B. von einer Internetseite herunterzuladen. Diese Mittel können einen Link, d.h. eine Adresse der Internetseite umfassen, auf der das Computerprogramm bezogen, z.B. von der das Computerprogramm auf ein mit dem Internet verbundenes Computersystem heruntergeladen werden kann. Diese Mittel können einen Code (z.B. eine alphanumerische Zeichenkette oder einen QR-Code, oder einen DataMatrix-Code oder einen Barcode oder eine anderen optisch und/oder elektronisch lesbaren Code) umfassen, mit dem der Käufer Zugang zu dem Computerprogramm erhält. Ein solcher Link und/oder Code kann beispielsweise auf einer Verpackung des Kontrastmittels aufgedruckt und/oder auf einem Beipackzettel zum Kontrastmittel aufgedruckt sein. Ein Kit ist somit ein Kombinationsprodukt umfassend ein Kontrastmittel und ein Computerprogramm (z.B. in Form eines Zugangs zu dem Computerprogramm oder in Form von ausführbarem Programmcode auf einem Datenträger), das zusammen zum Kauf angeboten wird.

Die Gegenstände der vorliegenden Offenbarung können für verschiedene Zwecke verwendet werden. Einige Anwendungsbeispiele werden nachfolgend beschrieben, ohne die Offenbarung auf diese Anwendungsbeispiele beschränken zu wollen.

Ein erstes Anwendungsbeispiel betrifft magnetresonanztomographische Untersuchungen zur Abgrenzung von intraaxialen Tumoren wie intrazerebralen Metastasen und malignen Gliomen. Wegen des infiltrativen Wachstums dieser Tumoren ist eine genaue Abgrenzung zwischen Tumor und gesundem Gewebe schwierig. Die Bestimmung der Ausdehnung eines Tumors ist jedoch für eine operative Entfernung entscheidend. Die Unterscheidung zwischen Tumoren und gesundem Gewebe wird durch Applikation eines extrazellulären erleichtert; nach intravenöser Gabe einer Standarddosis von 0,1 mmol/kg Körpergewicht des extrazellulären MRT-Kontrastmittels Gadobutrol lassen sich intraaxiale Tumoren deutlich besser abgrenzen. Bei höheren Dosen wird der Kontrast zwischen Läsion und gesundem Hirngewebe weiter erhöht; die Nachweisrate von Hirnmetastasen steigt linear mit der Dosis des Kontrastmittels an (siehe z.B. M. Hartmann et al.: Does the administration of a high dose of a paramagnetic contrast medium (Gadovist) improve the diagnostic value of magnetic resonance tomography in glioblastomas? doi: 10.1055/s-2007-1015623).

Dabei können eine einzelne Dreifachdosis oder eine zweite Folgedosis bis zu einer Gesamtdosis von 0,3 mmol/kg Körpergewicht verabreicht werden. Dadurch werden der Patient und die Umgebung zusätzlichem Gadolinium ausgesetzt, und im Falle eines zweiten Scans entstehen weitere zusätzliche Kosten.

Die Gegenstände der vorliegenden Offenbarung können eingesetzt werden, um eine Kontrastmitteldosis, die über die Standardmenge hinausgeht, zu vermeiden. Es können eine erste MRT-Aufnahme ohne Kontrastmittel oder mit einer geringeren Menge als die Standardmenge und eine zweite MRT-Aufnahme mit der Standardmenge erzeugt werden. Auf Basis dieser erzeugten MRT-Aufnahmen kann, wie in dieser Offenbarung beschrieben, eine synthetische MRT-Aufnahme erzeugt werden, bei der sich der Kontrast zwischen Läsionen und gesundem Gewebe durch eine zumindest anteilige nicht-lineare Verstärkung in weiten Grenzen variieren lässt. Dabei können Kontraste erreicht werden, die sonst nur durch Applikation einer Menge an Kontrastmittel erzielt werden können, die höher als die Standardmenge ist.

Ein weiteres Anwendungsbeispiel betrifft die Reduzierung der Menge an MRT-Kontrastmittel in einer magnetresonanztomographischen Untersuchung. Gadolinium-haltige Kontrastmittel wie Gadobutrol werden für eine Vielzahl an Untersuchungen eingesetzt. Sie dienen der Kontrastverstärkung bei Untersuchungen des Schädels, der Wirbelsäule, der Brust oder anderen Untersuchungen. Im zentralen Nervensystem hebt Gadobutrol Bereiche mit einer gestörten Blut-Hirn-Schranke und/oder abnormalen Gefäßen hervor. Im Brustgewebe macht Gadobutrol das Vorhandensein und Ausmaß einer bösartigen Brusterkrankung sichtbar. Gadobutrol wird auch in der kontrastverstärkten Magnetresonanzangiographie zur Diagnose von Schlaganfällen, zum Nachweis der Tumordurchblutung und zum Nachweis einer fokalen zerebralen Ischämie eingesetzt.

Aufgrund der zunehmenden Umweltbelastung, der Kostenbelastung des Gesundheitssystems und der Befürchtung akuter Nebenwirkungen und möglicher langfristiger Gesundheitsrisiken, insbesondere bei wiederholter und langfristiger Exposition, wird eine Dosisreduzierung von Gadolinium-haltigen Kontrastmitteln angestrebt. Dies kann durch die Gegenstände der vorliegenden Offenbarung erreicht werden.

Es können eine erste MRT-Aufnahme ohne Kontrastmittel und eine zweite MRT-Aufnahme mit einer Kontrastmittelmenge erzeugt werden, die geringer als die Standardmenge ist. Auf Basis dieser erzeugten MRT-Aufnahmen kann wie in dieser Offenbarung beschrieben, eine synthetische MRT-Aufnahme erzeugt werden, bei der sich der Kontrast durch die zumindest anteilige nicht-lineare Verstärkung in weiten Grenzen variieren lässt. Dabei kann mit einer geringeren Kontrastmittelmenge als der Standardmenge ein Kontrast erreicht werden, der dem Kontrast nach der Applikation der Standardmenge entspricht.

Ein weiteres Anwendungsbeispiel betrifft die Detektion, Identifizierung und/oder Charakterisierung von Läsionen in der Leber mit Hilfe eines hepatobiliären Kontrastmittels wie beispielsweise Primovist®.

Primovist® wird intravenös (i.v.) in einer Standarddosis von 0,025 mmol/kg Körpergewicht verabreicht. Diese Standarddosis ist geringer als die Standarddosis von 0,1 mmol/kg Körpergewicht bei extrazellulären MR-Kontrastmitteln. Im Vergleich zur kontrastverstärkten MRT mit extrazellulären Gadolinium-haltigen Kontrastmitteln ermöglicht Primovist® eine dynamische T1w-Mehrphasenbildgebung. Aufgrund der niedrigeren Dosis von Primovist® und der Beobachtung vorübergehender Bewegungsartefakte, die kurz nach der intravenösen Verabreichung auftreten können, wird die Kontrastverstärkung von Primovist® in der arteriellen Phase jedoch von Radiologen als geringer wahrgenommen als die die Kontrastverstärkung von extrazellulären MRT-Kontrastmitteln. Die Beurteilung der Kontrastverstärkung in der arteriellen Phase und der Vaskularität von fokalen Leberläsionen ist für die genaue Charakterisierung der Läsion aber von entscheidender Bedeutung.

Mit Hilfe der vorliegenden Erfindung kann der Kontrast insbesondere in der arteriellen Phase erhöht werden, ohne dass eine höhere Dosis verabreicht werden muss.

Es können eine erste MRT-Aufnahme ohne Kontrastmittel und eine zweite MRT-Aufnahme während der arteriellen Phase nach der Applikation einer Kontrastmittelmenge erzeugt werden, die der Standardmenge entspricht. Auf Basis dieser erzeugten MRT-Aufnahmen kann wie in dieser Offenbarung beschrieben, eine synthetische MRT-Aufnahme erzeugt werden, bei der sich der Kontrast in der arteriellen Phase durch die zumindest anteilige nicht-lineare Verstärkung in weiten Grenzen variieren lässt. Dabei können Kontraste erreicht werden, die sonst nur durch Applikation einer Menge an Kontrastmittel erzielt werden können, die höher als die Standardmenge ist.

Ein weiteres Anwendungsbeispiel betrifft die Verwendung von MRT-Kontrastmitteln in computertomographischen Untersuchungen.

MRT-Kontrastmittel entfalten üblicherweise in einer CT-Untersuchung eine geringere kontraststeigernde Wirkung als CT-Kontrastmittel. Dennoch kann es vorteilhaft sein, ein MRT-Kontrastmittel in einer CT-Untersuchung einzusetzen. Als Beispiel sei eine minimalinvasive Intervention in der Leber eines Patienten aufgeführt, bei der ein Chirurg den Eingriff mittels eines CT-Scanners verfolgt. Die Computertomographie (CT) hat gegenüber der Magnetresonanztomographie den Vorteil, dass während der Erzeugung von CT-Aufnahmen eines Untersuchungsbereichs eines Untersuchungsobjekts chirurgische Eingriffe in dem Untersuchungsbereich in größerem Umfang möglich sind. Es gibt hingegen nur wenige interventionelle Bestecke und chirurgische Geräte, die MRTtauglich sind. Zudem ist der Zugang zum Patienten durch die in der MRT verwendeten Magneten eingeschränkt. Während ein Chirurg also einen Eingriff in dem Untersuchungsbereich vornimmt, kann er den Untersuchungsbereich mit Hilfe der CT bildhaft darstellen und den Eingriff auf einem Monitor verfolgen.

Möchte ein Chirurg beispielsweise einen Eingriff in der Leber eines Patienten vornehmen, um z.B. eine Biopsie an einer Leberläsion durchzuführen oder einen Tumor zu entfernen, so ist in einer CT-Aufnahme der Leber der Kontrast zwischen einer Leberläsion oder dem Tumor und gesundem Lebergewebe nicht so ausgeprägt wie in einer MRT-Aufnahme nach der Applikation eines hepatobiliären Kontrastmittels. In der CT sind derzeit keine hepatobiliären CT-spezifischen Kontrastmittel bekannt und/oder zugelassen. Die Verwendung eines MRT-Kontrastmittels, insbesondere eines hepatobiliären MRT-Kontrastmittels in der Computertomographie kombiniert also die Möglichkeit der Differenzierung zwischen gesundem und erkranktem Lebergewebe und die Möglichkeit der Durchführung eines Eingriffs bei gleichzeitiger Darstellung der Leber.

Dabei kann die vergleichsweise geringe, durch das MRT-Kontrastmittel erzielte Kontrastverstärkung mit Hilfe der Gegenständer der vorliegenden Offenbarung erhöht werden, ohne dass eine höhere Dosis als die Standarddosis

verabreicht werden muss.

Es können eine erste CT-Aufnahme ohne MRT-Kontrastmittel und eine zweite CT-Aufnahme nach der Applikation eines MRT-Kontrastmittels erzeugt werden, dessen Menge der Standardmenge entspricht. Auf Basis dieser erzeugten CT-Aufnahmen kann wie in dieser Offenbarung beschrieben, eine synthetische CT-Aufnahme erzeugt werden, bei der sich der durch das MRT-Kontrastmittel hervorgerufene Kontrast durch die zumindest anteilige nicht-lineare Verstärkung in weiten Grenzen variieren lässt. Dabei können Kontraste erreicht werden, die sonst nur durch Applikation einer Menge an MRT-Kontrastmittel erzielt werden können, die höher als die Standardmenge ist.

Fig. 7 stellt die Kontrast-Rausch-Verhältnisse von synthetischen kontrastverstärkten Repräsentationen, die nach unterschiedlichen Verfahren erzeugt wurden, gegenüber.

Es wurden, für jeden Menschen einer Vielzahl an Menschen, MRT-Aufnahmen eines Untersuchungsbereichs des Menschen vor und nach Applikation eines hepatobiliären Kontrastmittels erzeugt. Der Untersuchungsbereich umfasst die Leber des Menschen. Eine erste MRT-Aufnahme repräsentierte den Untersuchungsbereich in der nativen Phase (vor Applikation des Kontrastmittels); eine zweite MRT-Aufnahme repräsentierte den Untersuchungsbereich in der arteriellen Phase (nach Applikation des Kontrastmittels).

Auf Basis der ersten MRT-Aufnahme und der zweiten MRT-Aufnahme wurde wie in dieser Offenbarung beschrieben eine erste synthetische kontrastverstärkte MRT-Aufnahme erzeugt. Dabei wurde das obere 0,99-Quantil linear mit einem Verstärkungsfaktor von 1,8 verstärkt und das untere 0,99-Quantil nicht-linear gemäß den Formeln (2a) und (2b) mit folgenden Werten verstärkt:

$$\beta^{(+)} = \beta^{(-)} = 1{,}8$$

$$\delta^{(+)} = \delta^{(-)} = 0$$

$$\gamma^{(+)} = \gamma^{(-)} = 1{,}6$$

Mit anderen Worten: 99% der Differenzwerte wurde nicht-linear verstärkt, während 1% der Differenzwerte linear verstärkt wurden.

Zusätzlich wurde nach der Verstärkung noch ein Tiefpassfilter in Form einer Gauß-Kurve mit einer Standardabweichung von 0,36 angewandt.

Zum Vergleich wurde, für jeden Menschen der Vielzahl an Menschen, eine zweite synthetische kontrastverstärkte MRT-Aufnahme erzeugt, die sich von der ersten synthetischen kontrastverstärkten MRT-Aufnahme dadurch unterscheidet, dass alle Differenzwerte mit einem Verstärkungsfaktor von 1,8 linear verstärkt wurden. Die zweite synthetische kontrastverstärkte MRT-Aufnahme weist also keine nicht-lineare Verstärkung auf.

Es wurde das Kontrast-Rausch-Verhältnis CNR der zweiten kontrastverstärkten MRT-Aufnahme sowie der ersten und zweiten synthetischen kontrastverstärkten MRT-Aufnahme gemäß folgender Formel berechnet:

$$\mathrm{CNR} = \frac{I_T - I_L}{\mathrm{STD}_L} \qquad (3)$$

Dabei ist $I_T$ die mittlere (arithmetisch gemittelte) Signalintensität (z.B. in Form eines Grauwertes) von einem definierten Gewebe (im vorliegenden Beispiel einer Aorta, einer Leberläsion und einer Portalvene), $I_L$ die mittlere (arithmetisch gemittelte) Signalintensität von gesunden Leberzellen und $STD_L$ die Standardabweichung der Signalintensitäten von gesunden Leberzellen.

In Fig. 7 sind für alle untersuchten Menschen die Kontrast-Rausch-Verhältnisse der synthetischen kontrastverstärkten MRT-Aufnahmen gegen das Kontrast-Rausch-Verhältnis der zweiten MRT-Aufnahme aufgetragen.

Fig. 7(a) zeigt die Auftragung für die Aorta, Fig. 7(b) zeigt die Auftragung für eine Leberläsion; Fig. 7(c) zeigt die Auftragung für die Portalvene.

Die Kreuze kennzeichnen die jeweils erste synthetische kontrastverstärkte MRT-Aufnahme, also diejenige, bei der zumindest anteilig eine nicht-lineare Verstärkung vorgenommen wurde. Die Kreise kennzeichnen die jeweils zweite synthetische kontrastverstärkte MRT-Aufnahme, also diejenige, bei der über den gesamten Bereich der Differenzwerte eine lineare Verstärkung vorgenommen wurde.

Die gestrichelten Linien kennzeichnen gleiche Kontrast-Rausch-Verhältnisse.

Es ist zu erkennen, dass sowohl die ersten synthetischen kontrastverstärkten MRT-Aufnahmen höhere Kontrast-Rausch-Verhältnisse als die nicht synthetisch verstärkten MRT-Aufnahmen aufweisen als auch die zweiten synthetischen kontrastverstärkten MRT-Aufnahmen; sowohl die Kreuze als auch die Kreise liegen in weiten Bereichen

oberhalb der gestrichelten Linien. Die ersten synthetischen kontrastverstärkten MRT-Aufnahmen weisen jedoch höhere Kontrast-Rausch-Verhältnisse als die zweiten synthetischen kontrastverstärkten MRT-Aufnahmen.

## Patentansprüche

**1.** Computer-implementiertes Verfahren umfassend:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,
- Bereitstellen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

**2.** Verfahren nach Anspruch 1, wobei zumindest ein Teil der positiven Differenzwerte nicht-linear verstärkt wird.

**3.** Verfahren nach Anspruch 1 oder 2, wobei negative Differenzwerte und positive Differenzwerte verstärkt werden, wobei zumindest ein Teil der positiven Differenzwerte nicht-linear verstärkt wird.

**4.** Verfahren nach einem der Ansprüche 1 bis 3, wobei es einen oberen positiven Differenzwert gibt und Differenzwerte oberhalb des oberen positiven Differenzwertes linear verstärkt werden, während Differenzwerte zwischen dem Differenzwert Null und dem oberen positiven Differenzwert nicht-linear verstärkt werden.

**5.** Verfahren nach Anspruch 4, wobei die nicht-lineare Verstärkung geringer ist als die lineare Verstärkung.

**6.** Verfahren nach einem der Ansprüche 1 bis 5, wobei alle positiven Differenzwerte mit einem Faktor verstärkt werden, wobei der Faktor für den Differenzwert Null und für einen oberen Differenzwert einen Maximalwert annimmt, und für einen Differenzwert, der zwischen dem Differenzwert Null und dem oberen Differenzwert liegt, einen Minimalwert annimmt.

**7.** Verfahren nach einem der Ansprüche 1 bis 6, wobei die Differenzwerte des oberen p-Quantils der positiven Differenzwerte linear verstärkt werden, während die Differenzwerte des unteren p-Quantils der positiven Differenzwerte nicht-linear verstärkt werden, wobei p eine reelle Zahl ist, die einen Wert im Bereich von 0,5 bis 0,99 oder 0,6 bis 0,99 oder 0,7 bis 0,99 oder 0,8 bis 0,99 oder 0,9 bis 0,99 oder 0,95 bis 0,99 annimmt.

**8.** Verfahren nach einem der Ansprüche 1 bis 7, wobei die Differenzwerte innerhalb eines Bereichs von Differenzwerten mit einer Verstärkungsfunktion verstärkt werden, wobei die Verstärkungsfunktion eine Potenzfunktion des jeweiligen Differenzwertes umfasst.

**9.** Verfahren nach einem der Ansprüche 1 bis 8, wobei die Differenzwerte innerhalb eines Bereichs von Differenzwerten mittels einer Verstärkungsfunktion verstärkt werden, wobei die Verstärkungsfunktion eine stetige und stetig differenzierbare Funktion ist.

**10.** Verfahren nach einem der Ansprüche 1 bis 9, wobei die Differenzwerte zumindest anteilig mittels einer Verstärkungsfunktion verstärkt werden, wobei die Verstärkungsfunktion eine Verstärkungsfunktion $f^{(+)}$ umfasst, die positive Differenzwerte verstärkt, und eine Verstärkungsfunktion $f^{(-)}$ umfasst, die negative Differenzwerte verstärkt, wobei gilt:

$$f^{(-)}(d^{(-)}) = -f^{(+)}(|d^{(-)}|)$$

wobei $d^{(-)}$ ein negativer Differenzwert und $|d^{(-)}|$ der Betrag des negativen Differenzwerts ist.

**11.** Verfahren nach einem der Ansprüche 1 bis 10, wobei Differenzwerte innerhalb eines Bereichs von Differenzwerten mit einer Verstärkungsfunktion verstärkt werden, wobei die Verstärkungsfunktion die folgende Form hat:

$$f^{(+)} = \beta^{(+)} \cdot d^{(+)} \cdot \left(\frac{d^{(+)}}{d^{(+)}_{max}}\right)^{\gamma^{(+)}} + \delta^{(+)}$$

$$f^{(-)} = \beta^{(-)} \cdot d^{(-)} \cdot \left(\frac{|d^{(-)}|}{|d^{(-)}|_{max}}\right)^{\gamma^{(-)}} + \delta^{(-)}$$

wobei $f^{(+)}$ eine Verstärkungsfunktion ist, die positive Differenzwerte verstärkt,
wobei $f^{(-)}$ eine Verstärkungsfunktion ist, die negative Differenzwerte verstärkt,
wobei $\beta^{(+)}$ und $\beta^{(-)}$ Faktoren sind, die unabhängig voneinander einen Wert annehmen, der größer als 1 ist,
wobei $d^{(+)}$ ist ein positiver Differenzwert ist,
wobei $d^{(+)}_{max}$ der maximale positive Differenzwert ist, der in dem Bereich von Differenzwerten auftritt,
wobei $d^{(-)}$ein negativer Differenzwert ist,
wobei $|d^{(-)}|$ der Betrag des negativen Differenzwerts $d^{(-)}$ist,
wobei $|d^{(-)}|_{max}$ der maximale Betrag ist, der in dem Bereich von negativen Differenzwerten auftritt,
wobei $\gamma^{(+)}$ und $\gamma^{(-)}$ Exponenten sind, die unabhängig voneinander einen positiven reellen Wert annehmen,
wobei $\delta^{(+)}$ und $\delta^{(-)}$ unabhängig voneinander den Wert Null oder einen positiven oder negativen reellen Wert annehmen.

**12.** Verfahren nach Anspruch 11, wobei $\gamma^{(+)}$ und $\gamma^{(-)}$ einen Wert im Bereich von 1,1 bis 3, oder einen Wert im Bereich von 1,2 bis 2,9, oder einen Wert im Bereich von 1,3 bis 2,8, oder einen Wert im Bereich von 1,4 bis 2,7, oder einen Wert im Bereich von 1,5 bis 2,6 annehmen.

**13.** Verfahren nach einem der Ansprüche 1 oder 12, wobei das Untersuchungsobjekt ein Lebewesen, und/oder ein Säugetier und/oder ein Mensch ist.

**14.** Verfahren nach einem der Ansprüche 1 bis 13, wobei der Untersuchungsbereich eine Leber, eine Niere, ein Herz, eine Lunge, ein Gehirn, ein Magen, eine Blase, eine Bauchspeicheldrüse, eine Prostatadrüse, eine Brust, ein Darm oder ein Teil davon oder ein anderer Teil des Körpers eines Säugetiers und/oder eines Menschen ist oder zumindest einen Teil davon umfasst.

**15.** Verfahren nach einem der Ansprüche 1 bis 14,

wobei die synthetische kontrastverstärkte Repräsentation den Untersuchungsbereich nach Applikation einer dritten Menge des Kontrastmittels repräsentiert,
wobei die erste Menge Null ist oder die erste Menge ungleich Null und kleiner als die Standardmenge ist,
wobei die zweite Menge kleiner als die Standardmenge ist, und
wobei die dritte Menge gleich der Standardmenge oder größer als die Standardmenge ist.

**16.** Verfahren nach einem der Ansprüche 1 bis 15,

wobei die synthetische kontrastverstärkte Repräsentation den Untersuchungsbereich nach Applikation einer dritten Menge des Kontrastmittels repräsentiert,
wobei die erste Menge Null ist oder die erste Menge ungleich Null und kleiner als die Standardmenge ist,

wobei die zweite Menge gleich der Standardmenge ist, und
wobei die dritte Menge größer als die Standardmenge ist.

17. Verfahren nach einem der Ansprüche 1 bis 16, wobei die erste Repräsentation und die zweite Repräsentation das Ergebnis einer radiologischen Untersuchung an dem Untersuchungsobjekt sind.

18. Verfahren nach einem der Ansprüche 1 bis 17, wobei

die erste Repräsentation und die zweite Repräsentation ein Ergebnis einer magnetresonanztomographischen Untersuchung sind und/oder aus Magnetresonanzaufnahmen erzeugt worden sind, oder
die erste Repräsentation und die zweite Repräsentation ein Ergebnis einer computertomographischen Untersuchung sind und/oder aus computertomographischen Aufnahmen erzeugt worden sind.

19. Verfahren nach einem der Ansprüche 1 bis 16, wobei das Kontrastmittel ein MRT-Kontrastmittel und/oder ein hepatobiliäres Kontrastmittel ist.

20. Computersystem (1) umfassend

• eine Empfangseinheit (10),
• eine Steuer- und Recheneinheit (20), und
• eine Ausgabeeinheit (30),

wobei die Steuer- und Recheneinheit (20) konfiguriert ist,

- eine erste Repräsentation bereitzustellen und/oder die Empfangseinheit (10) zu veranlassen, eine erste Repräsentation zu empfangen, wobei die erste Repräsentation einen Untersuchungsbereich eines Untersuchungsobjekts ohne Kontrastmittel oder nach Applikation einer ersten Menge eines Kontrastmittels repräsentiert,
- eine zweite Repräsentation bereitzustellen und/oder die Empfangseinheit (10) zu veranlassen, eine zweite Repräsentation zu empfangen, wobei die zweite Repräsentation den Untersuchungsbereich des Untersuchungsobjekts nach Applikation einer zweiten Menge des Kontrastmittels repräsentiert,
- eine dritte Repräsentation des Untersuchungsbereichs des Untersuchungsobjekts auf Basis der ersten Repräsentation und der zweiten Repräsentation zu erzeugen, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- eine vierte Repräsentation des Untersuchungsbereichs des Untersuchungsobjekts zu erzeugen, wobei das Erzeugen der vierten Repräsentation eine nicht-lineare Verstärkung zumindest eines Teils der Differenzwerte der dritten Repräsentation umfasst,
- eine synthetische kontrastverstärkte Repräsentation des Untersuchungsbereichs des Untersuchungsobjekts zu erzeugen, wobei das Erzeugen der synthetischen kontrastverstärkten Repräsentation ein Addieren der vierten Repräsentation zu der ersten Repräsentation oder zu der zweiten Repräsentation umfasst,
- die synthetische kontrastverstärkte Repräsentation des Untersuchungsbereichs des Untersuchungsobjekts zu speichern oder die Ausgabeeinheit (30) zu veranlassen, die synthetische kontrastverstärkte Repräsentation auszugeben und/oder an ein separates Computersystem zu übermitteln.

21. Computerprogrammprodukt umfassend einen Datenträger, auf dem ein Computerprogramm (40) gespeichert ist, wobei das Computerprogramm (40) in einen Arbeitsspeicher (22) eines Computersystems (1) geladen werden kann und dort das Computersystem (1) dazu veranlasst, folgende Schritte ausführen:

- Bereitstellen einer ersten Repräsentation, wobei die erste Repräsentation einen Untersuchungsbereich eines Untersuchungsobjekts ohne Kontrastmittel oder nach Applikation einer ersten Menge eines Kontrastmittels repräsentiert,
- Bereitstellen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

**22.** Verwendung eines Kontrastmittels in einem radiologischen Untersuchungsverfahren umfassend:

- Erzeugen einer ersten Repräsentation, wobei die erste Repräsentation einen Untersuchungsbereich eines Untersuchungsobjekts ohne Kontrastmittel oder nach Applikation einer ersten Menge des Kontrastmittels repräsentiert,
- Erzeugen einer zweiten Repräsentation, wobei die zweite Repräsentation den Untersuchungsbereich des Untersuchungsobjekts nach Applikation einer zweiten Menge des Kontrastmittels repräsentiert,
- Erzeugen einer dritten Repräsentation des Untersuchungsbereichs des Untersuchungsobjekts auf Basis der ersten Repräsentation und der zweiten Repräsentation, wobei das Erzeugen der dritten Repräsentation ein Subtrahieren der ersten Repräsentation von der zweiten Repräsentation umfasst, wobei die dritte Repräsentation eine Vielzahl an Bildelementen umfasst, wobei jedem Bildelement mindestens ein Differenzwert zugeordnet ist,
- Erzeugen einer vierten Repräsentation des Untersuchungsbereichs des Untersuchungsobjekts, wobei das Erzeugen der vierten Repräsentation eine nicht-lineare Verstärkung zumindest eines Teils der Differenzwerte der dritten Repräsentation umfasst,
- Erzeugen einer synthetischen kontrastverstärkten Repräsentation des Untersuchungsbereichs des Untersuchungsobjekts, wobei das Erzeugen der synthetischen kontrastverstärkten Repräsentation ein Addieren der vierten Repräsentation zu der ersten Repräsentation oder zu der zweiten Repräsentation umfasst,
- Ausgeben und/oder Speichern der synthetischen kontrastverstärkten Repräsentation des Untersuchungsbereichs des Untersuchungsobjekts und/oder Übermitteln der synthetischen kontrastverstärkten Repräsentation an ein separates Computersystem.

**23.** Verwendung gemäß Anspruch 22, wobei das radiologische Untersuchungsverfahren eine magnetresonanztomographische Untersuchung oder eine computertomographische Untersuchung ist und wobei das Kontrastmittel

- einen $Gd^{3+}$-Komplex einer Verbindung der Formel (I)

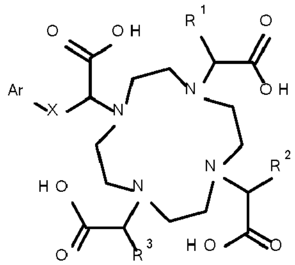

(I) ,

umfasst, wobei

Ar eine Gruppe ausgewählt aus

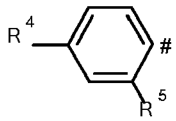
und
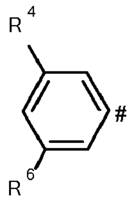

darstellt,
wobei # die Anknüpfung zu X darstellt,
X eine Gruppe darstellt, die aus
$CH_2$, $(CH_2)_2$, $(CH_2)_3$, $(CH_2)_4$ und $*\text{-}(CH_2)_2\text{-}O\text{-}CH_2\text{-}^{\#}$ ausgewählt wird,
wobei * die Anknüpfung zu Ar darstellt und # die Anknüpfung zum Essigsäurerest darstellt,
$R^1$, $R^2$ and $R^3$ unabhängig voneinander ein Wasserstoffatom oder eine Gruppe ausgewählt aus $C_1$-$C_3$-Alkyl, $-CH_2OH$, $-(CH_2)_2OH$ und $-CH_2OCH_3$ darstellen,
$R^4$ eine Gruppe ausgewählt aus $C_2$-$C_4$-Alkoxy, $(H_3C\text{-}CH_2)\text{-}O\text{-}(CH_2)_2\text{-}O\text{-}$, $(H_3C\text{-}CH_2)\text{-}O\text{-}(CH_2)_2\text{-}O\text{-}(CH_2)_2\text{-}O\text{-}$ und $(H_3C\text{-}CH_2)\text{-}O\text{-}(CH_2)_2\text{-}O\text{-}(CH_2)_2\text{-}O\text{-}(CH_2)_2\text{-}O\text{-}$ darstellt,
$R^5$ ein Wasserstoffatom darstellt,
und
$R^6$ ein Wasserstoffatom darstellt,
oder ein Stereoisomer, Tautomer, Hydrat, Solvat oder Salz davon, oder eine Mischung davon, oder

- einen $Gd^{3+}$-Komplex einer Verbindung der Formel (II)

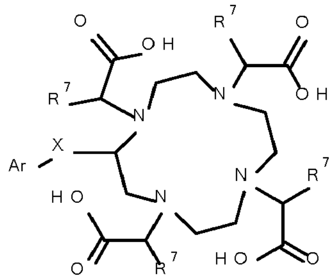

(II) ,

umfasst, wobei

Ar eine Gruppe ausgewählt aus

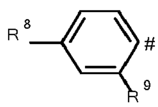
and
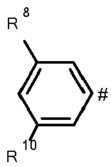

darstellt,
wobei # die Anknüpfung zu X darstellt,
X eine Gruppe darstellt, die aus $CH_2$, $(CH_2)_2$, $(CH_2)_3$, $(CH_2)_4$ and $*\text{-}(CH_2)_2\text{-}O\text{-}CH_2\text{-}^{\#}$ ausgewählt wird, wobei * die Anknüpfung zu Ar darstellt und # die Anknüpfung zum Essigsäurerest darstellt,
$R^7$ ein Wasserstoffatom oder eine Gruppe ausgewählt aus Ci-Cs-Alkyl, $-CH_2OH$, $-(CH_2)_2OH$ und $-CH_2OCH_3$ darstellt,
$R^8$ eine Gruppe ausgewählt aus $C_2$-$C_4$-Alkoxy, $(H_3C\text{-}CH_2O)\text{-}(CH_2)_2\text{-}O\text{-}$, $(H_3C\text{-}CH_2O)\text{-}(CH_2)_2\text{-}O\text{-}(CH_2)_2\text{-}O\text{-}$ und $(H_3C\text{-}CH_2O)\text{-}(CH_2)_2\text{-}O\text{-}(CH_2)_2\text{-}O\text{-}(CH_2)_2\text{-}O\text{-}$ darstellt;
$R^9$ und $R^{10}$ unabhängig voneinander ein Wasserstoffatom darstellen;
oder ein Stereoisomer, Tautomer, Hydrat, Solvat oder Salz davon, oder eine Mischung davon, oder

- das Kontrastmittel eine der folgenden Substanzen umfasst:

  - Gadolinium(III) 2-[4,7,10-tris(carboxymethyl)-1,4,7,10-tetrazacyclododec-1-yl]essigsäure,
  - Gadolinium(III) Ethoxybenzyl-diethylenetriaminepentaessigsäure,
  - Gadolinium(III) 2-[3,9-bis[1-carboxylato-4-(2,3-dihydroxypropylamino)-4-oxobutyl]-3,6,9,15-tetrazabicyclo[9.3.1]pentadeca-1(15),11,13-trien-6-yl]-5-(2,3-dihydroxypropylamino)-5-oxopentanoat,
  - Dihydrogen[(±)-4-carboxy-5,8,11-tris(carboxymethyl)-l-phenyl-2-oxa-5,8,11-triazatridecan-13 -oato(5 -)] gadolinat(2-),
  - Tetragadolinium-[4,10-bis(carboxylatomethyl)-7-{3,6,12,15-tetraoxo-16-[4,7,10-tris-(carboxylatomethyl)-1,4,7,10-tetraazacyclododecan-1-yl]-9,9-bis({[({2-[4,7,10-tris-(carboxylatomethyl)-1,4,7,10-tetraazacyclododecan-1 -yl]propanoyl} amino)acetyl] - amino}methyl)-4,7,11,14-tetraazahepta-decan-2-yl}-1,4,7,10-tetraazacyclododecan-1-yl]acetat,
  - 2,2',2"-(10-{1-carboxy-2-[2-(4-ethoxyphenyl)ethoxy]ethyl}-1,4,7,10-tetraazacyclododecan-1,4,7-triyl)triacetat,
  - Gadolinium 2,2',2"-{10-[1-carboxy-2-{4-[2-(2-ethoxyethoxy)ethoxy]phenyl}ethyl]-1,4,7,10-tetraazacyclododecan-1,4,7-triyl}triacetat,
  - Gadolinium 2,2',2"-{ 10-[(1R)-1-carboxy-2-{4-[2-(2-ethoxyethoxy)ethoxy]phenyl}ethyl]-1,4,7,10-tetraazacyclododecan-1,4,7-triyl}triacetat,
  - Gadolinium (2S,2'S,2"S)-2,2',2"-{10-[(1S)-1-carboxy-4-{4-[2-(2-ethoxyethoxy)ethoxy] phenyl}butyl]-1,4,7,10-tetraazacyclododecan-1,4,7-triyl}tris(3 -hydroxypropanoat)
  - Gadolinium 2,2',2"-{10-[(1S)-4-(4-butoxyphenyl)-1-carboxybutyl]-1,4,7,10-tetraazacyclododecan-1,4,7-triyl}triacetat,
  - Gadolinium(III) 5,8-bis(carboxylatomethyl)-2-[2-(methylamino)-2-oxoethyl]-10-oxo-2,5,8,11-tetraazadodecan-1-carboxylat-Hydrat
  - Gadolinium(III) 2-[4-(2-hydroxypropyl)-7,10-bis(2-oxido-2-oxoethyl)-1,4,7,10-tetrazacyclododec-1-yl]acetat,
  - Gadolinium(III) 2,2',2"-(10-((2R,3S)-1,3,4-trihydroxybutan-2-yl)-1,4,7,10-tetraazacyclododecan-1,4,7-triyl)triacetat,
  - Gadolinium-2,2',2"- {(25)-10-(carboxymethyl)-2-[4-(2-ethoxyethoxy)benzyl] -1,4,7,10-tetraazacyclododecane-1,4,7-triyl}triacetat,
  - Gadolinium-2,2',2"-[10-(carboxymethyl)-2-(4-ethoxybenzyl)-1,4,7,10-tetraazacyclododecane-1,4,7-triyl] triacetat.

**24.** Kit umfassend ein Computerprogrammprodukt gemäß Anspruch 21 und ein Kontrastmittel, wobei das Kontrastmittel vorzugsweise

- einen $Gd^{3+}$-Komplex einer Verbindung der Formel (I)

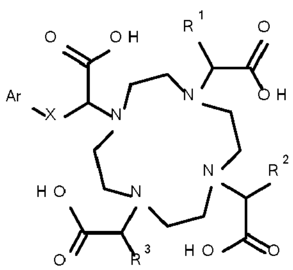

(I) ,

umfasst, wobei

Ar eine Gruppe ausgewählt aus

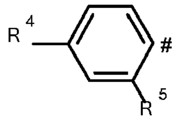 und 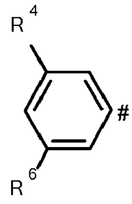

darstellt,
wobei # die Anknüpfung zu X darstellt,
X eine Gruppe darstellt, die aus
$CH_2$, $(CH_2)_2$, $(CH_2)_3$, $(CH_2)_4$ und $*\text{-}(CH_2)_2\text{-O-}CH_2\text{-}^{\#}$ ausgewählt wird,
wobei * die Anknüpfung zu Ar darstellt und # die Anknüpfung zum Essigsäurerest darstellt,
$R^1$, $R^2$ and $R^3$ unabhängig voneinander ein Wasserstoffatom oder eine Gruppe ausgewählt aus $C_1$-$C_3$-Alkyl, $-CH_2OH$, $-(CH_2)_2OH$ und $-CH_2OCH_3$ darstellen,
$R^4$ eine Gruppe ausgewählt aus $C_2$-$C_4$-Alkoxy, $(H_3C\text{-}CH_2)\text{-O-}(CH_2)_2\text{-O-}$, $(H_3C\text{-}CH_2)\text{-O-}(CH_2)_2\text{-O-}(CH_2)_2\text{-O-}$ und $(H_3C\text{-}CH_2)\text{-O-}(CH_2)_2\text{-O-}(CH_2)_2\text{-O-}(CH_2)_2\text{-O-}$ darstellt,
$R^5$ ein Wasserstoffatom darstellt,
und
$R^6$ ein Wasserstoffatom darstellt,
oder ein Stereoisomer, Tautomer, Hydrat, Solvat oder Salz davon, oder eine Mischung davon, oder

- einen $Gd^{3+}$-Komplex einer Verbindung der Formel (II)

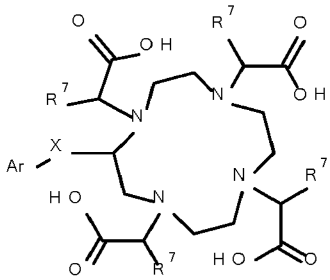

(II) ,

umfasst, wobei

Ar eine Gruppe ausgewählt aus

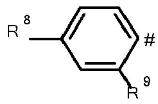 and 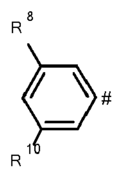

darstellt,
wobei # die Anknüpfung zu X darstellt,
X eine Gruppe darstellt, die aus $CH_2$, $(CH_2)_2$, $(CH_2)_3$, $(CH_2)_4$ and $*\text{-}(CH_2)_2\text{-O-}CH_2\text{-}^{\#}$ ausgewählt wird, wobei * die Anknüpfung zu Ar darstellt und # die Anknüpfung zum Essigsäurerest darstellt,
$R^7$ ein Wasserstoffatom oder eine Gruppe ausgewählt aus Ci-Cs-Alkyl, $-CH_2OH$, $-(CH_2)_2OH$ und $-CH_2OCH_3$ darstellt,
$R^8$ eine Gruppe ausgewählt aus $C_2$-$C_4$-Alkoxy, $(H_3C\text{-}CH_2O)\text{-}(CH_2)_2\text{-O-}$, $(H_3C\text{-}CH_2O)\text{-}(CH_2)_2\text{-O-}(CH_2)_2\text{-O-}$ und $(H_3C\text{-}CH_2O)\text{-}(CH_2)_2\text{-O-}(CH_2)_2\text{-O-}(CH_2)_2\text{-O-}$ darstellt;
$R^9$ und $R^{10}$ unabhängig voneinander ein Wasserstoffatom darstellen;
oder ein Stereoisomer, Tautomer, Hydrat, Solvat oder Salz davon, oder eine Mischung davon, oder

- das Kontrastmittel eine der folgenden Substanzen umfasst:

  - Gadolinium(III) 2-[4,7,10-tris(carboxymethyl)-1,4,7,10-tetrazacyclododec-1-yl]essigsäure,
  - Gadolinium(III) Ethoxybenzyl-diethylenetriaminepentaessigsäure,
  - Gadolinium(III) 2-[3,9-bis[1-carboxylato-4-(2,3-dihydroxypropylamino)-4-oxobutyl]-3,6,9,15-tetrazabicyclo[9.3.1]pentadeca-1(15),11,13-trien-6-yl]-5-(2,3-dihydroxypropylamino)-5-oxopentanoat,
  - Dihydrogen[(±)-4-carboxy-5,8,11-tris(carboxymethyl)-1-phenyl-2-oxa-5,8,11-triazatridecan-13 -oato(5 -)] gadolinat(2-),
  - Tetragadolinium-[4,10-bis(carboxylatomethyl)-7-{3,6,12,15-tetraoxo-16-[4,7,10-tris-(carboxylatomethyl)-1,4,7,10-tetraazacyclododecan-1-yl]-9,9-bis({[({2-[4,7,10-tris-(carboxylatomethyl)-1,4,7,10-tetraazacyclododecan-1 -yl]propanoyl} amino)acetyl] - amino}methyl)-4,7,11,14-tetraazahepta-decan-2-yl}-1,4,7,10-tetraazacyclododecan-1-yl]acetat,
  - 2,2',2"-(10-{1-carboxy-2-[2-(4-ethoxyphenyl)ethoxy]ethyl}-1,4,7,10-tetraazacyclododecan-1,4,7-triyl)triacetat,
  - Gadolinium 2,2',2"-{10-[1-carboxy-2-{4-[2-(2-ethoxyethoxy)ethoxy]phenyl}ethyl]-1,4,7,10-tetraazacyclododecan-1,4,7-triyl }triacetat,
  - Gadolinium 2,2',2"-{ 10-[(1R)-1-carboxy-2-{4-[2-(2-ethoxyethoxy)ethoxy]phenyl}ethyl]-1,4,7,10-tetraazacyclododecan-1,4,7-triyl}triacetat,
  - Gadolinium (2S,2'S,2"S)-2,2',2"-{10-[(1S)-1-carboxy-4-{4-[2-(2-ethoxyethoxy)ethoxy] phenyl}butyl]-1,4,7,10-tetraazacyclododecan-1,4,7-triyl}tris(3-hydroxypropanoat)
  - Gadolinium 2,2',2"-{10-[(1S)-4-(4-butoxyphenyl)-1-carboxybutyl]-1,4,7,10-tetraazacyclododecan-1,4,7-triyl}triacetat,
  - Gadolinium(III) 5,8-bis(carboxylatomethyl)-2-[2-(methylamino)-2-oxoethyl]-10-oxo-2,5,8,11-tetraazadodecan-1-carboxylat-Hydrat
  - Gadolinium(III) 2-[4-(2-hydroxypropyl)-7,10-bis(2-oxido-2-oxoethyl)-1,4,7,10-tetrazacyclododec-1-yl]acetat,
  - Gadolinium(III) 2,2',2"-(10-((2R,3S)-1,3,4-trihydroxybutan-2-yl)-1,4,7,10-tetraazacyclododecan-1,4,7-triyl)triacetat,
  - Gadolinium-2,2',2"-{(2S)-10-(carboxymethyl)-2-[4-(2-ethoxyethoxy)benzyl]-1,4,7,10-tetraazacyclododecane-1,4,7-triyl}triacetat,
  - Gadolinium-2,2',2"-[10-(carboxymethyl)-2-(4-ethoxybenzyl)-1,4,7,10-tetraazacyclododecane-1,4,7-triyl] triacetat.

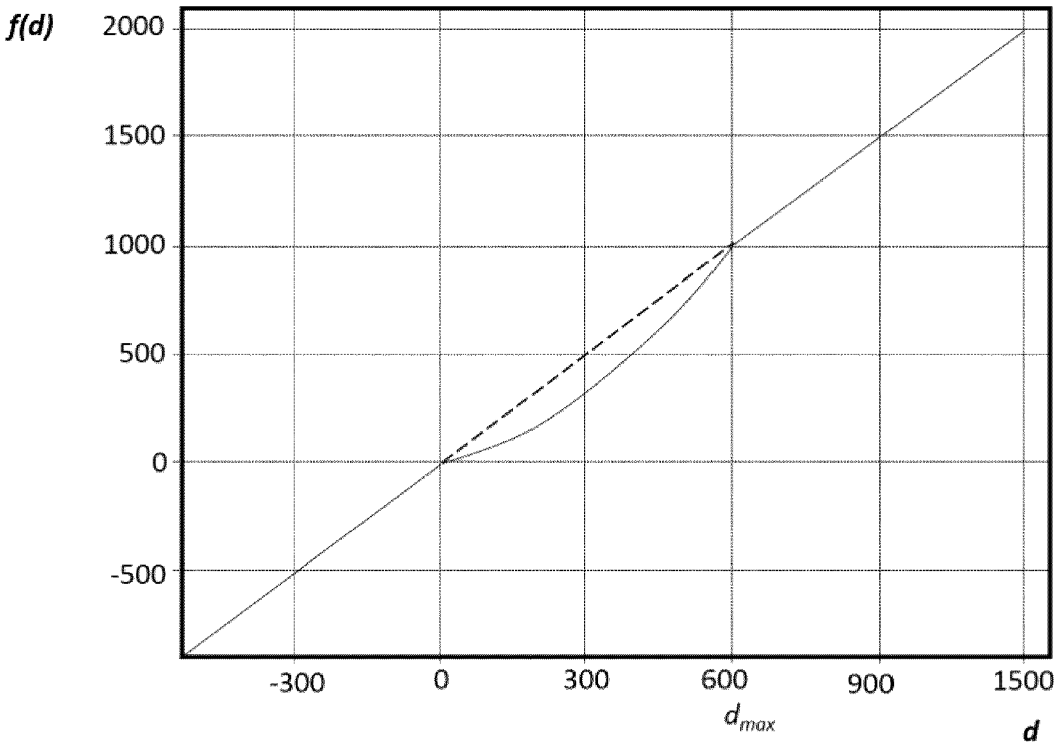
f(d)
2000
1500
1000
500
0
-500
-300
0
300
600
900
1500
$d_{max}$
d

Fig. 1

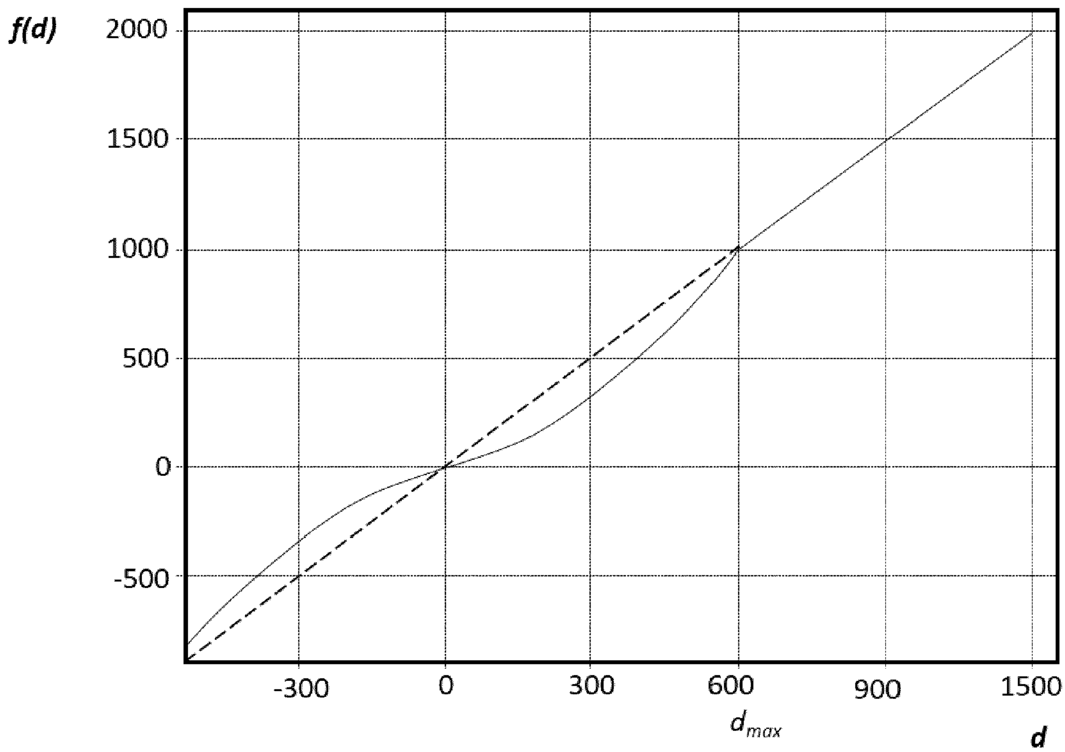
f(d)
2000
1500
1000
500
0
-500
-300
0
300
600
900
1500
$d_{max}$
d

Fig. 2

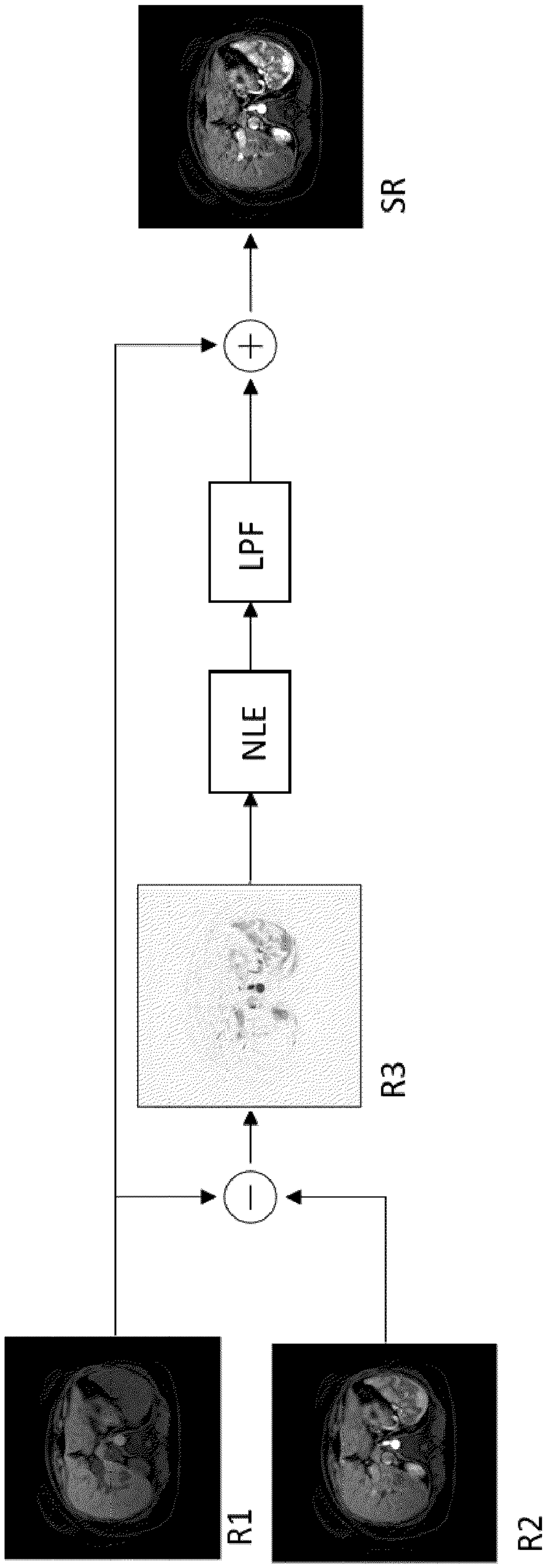


Fig. 3

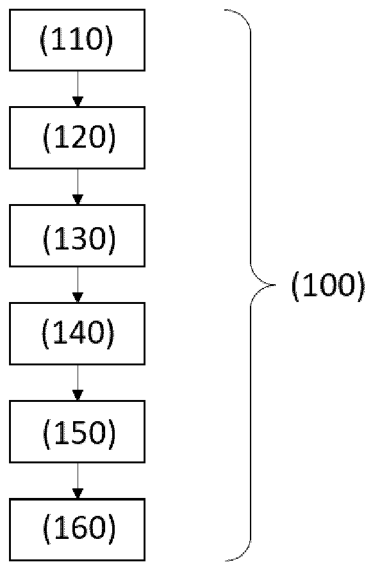


Fig. 4

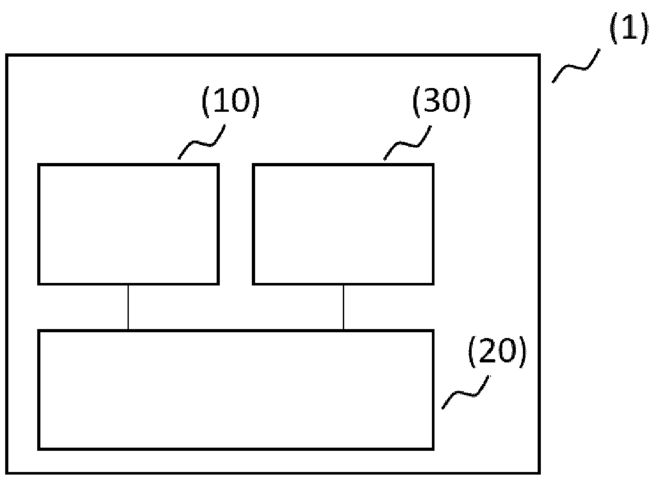


Fig. 5

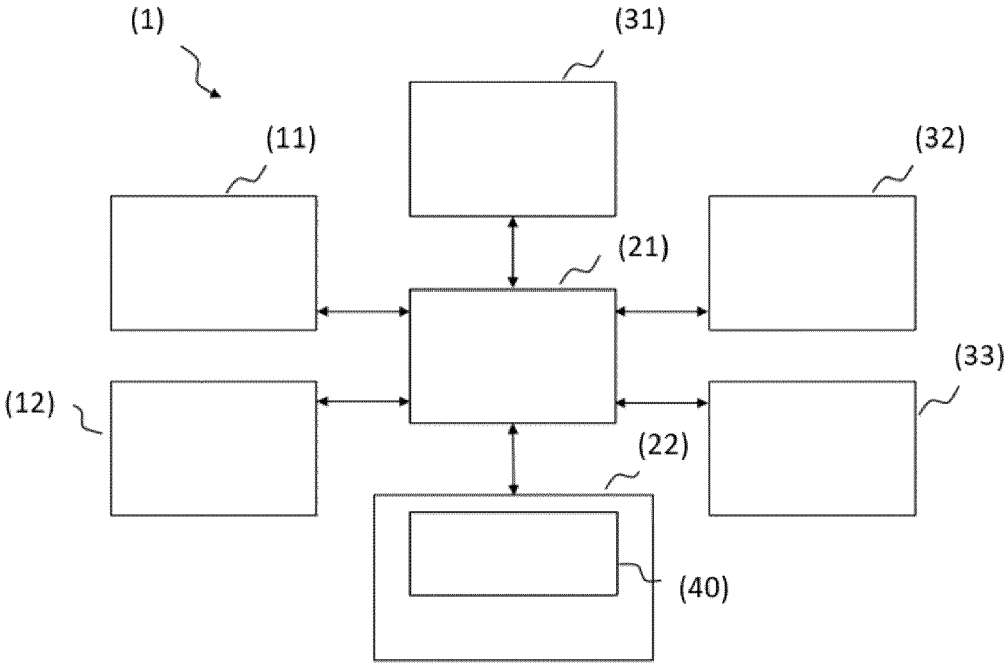


Fig. 6

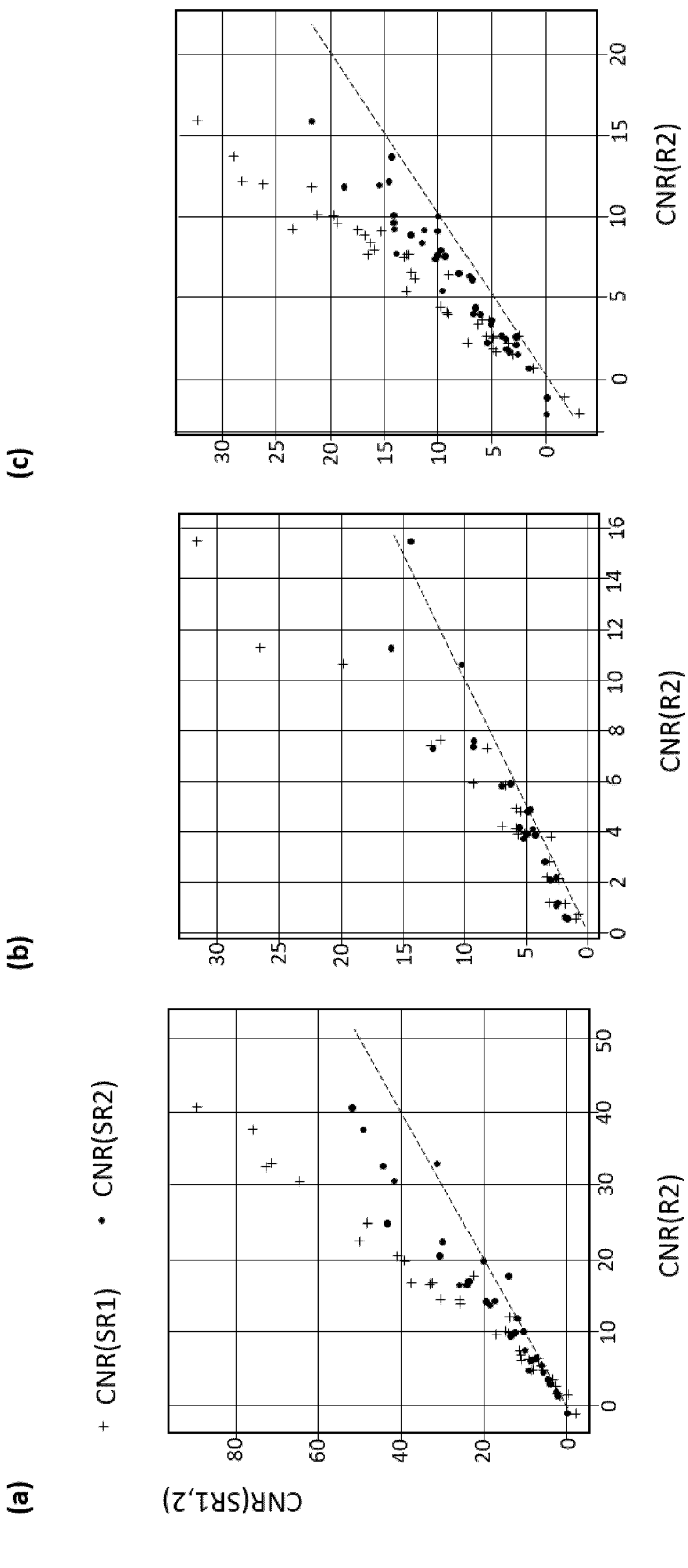


Fig. 7

Europäisches Patentamt
European Patent Office
Office européen des brevets

# EUROPÄISCHER RECHERCHENBERICHT

Nummer der Anmeldung
EP 24 18 1079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>Y | WO 2023/237742 A1 (UNIV BONN RHEINISCHE FRIEDRICH WILHELMS [DE])<br>14. Dezember 2023 (2023-12-14)<br>* Seite 9, letzter Absatz - Seite 13, Zeile 19 *<br>* Abbildungen 1, 4-6, 14 * | 1-4, 6-10, 13-22<br>5,11,12, 23,24 | INV.<br>G06T5/50<br>G06T5/94 |
| Y | US 5 473 373 A (HWUNG DEN-JEN [TW] ET AL)<br>5. Dezember 1995 (1995-12-05)<br>* Zusammenfassung; Abbildungen 4, 6 *<br>* Gleichung 6 und benachbarte Absätze * | 5,11,12 | |
| Y | WO 2024/046831 A1 (BAYER AG [DE])<br>7. März 2024 (2024-03-07)<br>* Anspruch 17 * | 23,24 | |

RECHERCHIERTE SACHGEBIETE (IPC)

G06T

Der vorliegende Recherchenbericht wurde für alle Patentansprüche erstellt

3

| Recherchenort | Abschlußdatum der Recherche | Prüfer |
|---|---|---|
| München | 14. Februar 2025 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

Europäisches Patentamt
European Patent Office
Office européen des brevets

Nummer der Anmeldung
EP 24 18 1079

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

# MANGELNDE EINHEITLICHKEIT DER ERFINDUNG ERGÄNZUNGSBLATT B

Nummer der Anmeldung
EP 24 18 1079

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**1. Ansprüche: 2-22(vollständig); 1(teilweise)**

**Erzeugung einer verbesserten Datenrepräsentation / programmatische Bildverbesserung**

---

**2. Ansprüche: 23, 24(vollständig); 1(teilweise)**

**Verwendung eines spezifischen Kontrastmittels / einer chemischen Zusammensetzung für radiologische Aufnahmen**

---

## ANHANG ZUM EUROPÄISCHEN RECHERCHENBERICHT ÜBER DIE EUROPÄISCHE PATENTANMELDUNG NR.

EP 24 18 1079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2025

| Im Recherchenbericht angeführtes Patentdokument | Datum der Veröffentlichung | Mitglied(er) der Patentfamilie | Datum der Veröffentlichung |
|---|---|---|---|
| WO 2023237742 A1 | 14-12-2023 | EP 4290263 A1<br>WO 2023237742 A1 | 13-12-2023<br>14-12-2023 |
| US 5473373 A | 05-12-1995 | KEINE | |
| WO 2024046831 A1 | 07-03-2024 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2024100233 A1
- WO 2007042504 A
- WO 2020030618 A
- WO 2022013454 A
- WO 2016193190 A
- WO 2022194777 A
- US 6039931 A
- WO 2024052156 A1


### In der Beschreibung aufgeführte Nicht-Patentliteratur


- **K. FANG**. The Radon Transformation and Its Application in Tomography. *Journal of Physics Conference Series*, vol. 1903 (1), 012066
- **A. S. L. JASCINTH et al.** Contrast Agents in computed tomography: A Review. *Journal of Applied Dental and Medical Sciences*, 2016, vol. 2 (2), 143-149
- **H. LUSIC et al.** X-ray-Computed Tomography Contrast Agents. *Chem. Rev.*, 2013, vol. 113 (3), 1641-1666
- **M. R. NOUGH et al.** Radiographie and magnetic resonances contrast agents: Essentials and tips for safe practices. *World J Radiol.*, 28 September 2017, vol. 9 (9), 339-349, https://www.radiology.wisc.edu/wp-content/uploads/2017/10/contrast-agents-tutorial.pdf
- **L. C. ABONYI et al.** Intravascular Contrast Media in Radiography: Historical Development & Review ofRisk Factors for Adverse Reactions. *South American Journal of Clinical Research*, 2016, vol. 3 (1), 1-10
- ACR Manual on Contrast Media. 2020
- **A. IGNEE et al.** Ultrasound contrast agents. *Endosc Ultrasound.*, November 2016, vol. 5 (6), 355-362
- **J. TROTTER et al.** Positron Emission Tomography (PET)/Computed Tomography (CT) Imaging in Radiation Therapy Treatment Planning: A Review of PET Imaging Tracers and Methods to Incorporate PET/CT. *Advances in Radiation Oncology*, 2023, vol. 8, 101212
- **J. LOHRKE et al.** Preclinical Profile of Gadoquatrane: A Novel Tetrameric, Macrocyclic High Relaxivity Gadolinium-Based Contrast Agent. *Invest Radiol.*, 2022, vol. 57 (10), 629-638
- **F.J. HARRIS et al.** On the Use of Windows for Harmonie Analysis with the Discrete Fourier Transform. *Proceedings oft he IEEE*, 1978, vol. 66 (1)
- **K. M. M PRABHU**. Window Functions and Their Applications in Signal Processing. CRC Press, 2014
- **M. HARTMANN et al.** *Does the administration of a high dose of a paramagnetic contrast medium (Gadovist) improve the diagnostic value of magnetic resonance tomography in glioblastomas?*